# EUROPEAN PATENT SPECIFICATION

(11) **EP 1 767 271 B1**
(45) Date of publication and mention of the grant of the patent: **05.12.2012**
(21) Application number: 06023740.1
(22) Date of filing: 12.04.2006
(51) Int. Cl.: B01L 3/02, G01N 35/10, G01N 21/55

(54) **Assay system including a fluid dispenser and a sensor unit**
Untersuchungssystem mit einer Abgabevorrichtung für Fluide und einer Sensoreinheit
Système d'essais comprenant un dispositif pour la distribution de fluide une unité de détection

(30) Priority: 13.04.2005 JP 2005116057; 29.09.2005 JP 2005284529; 28.03.2006 JP 2006088198
(43) Date of publication of application: 28.03.2007
(62) Divisional of application: 06007757.5
(73) Proprietor: Fujifilm Corporation, Minato-ku Tokyo (JP)
(72) Inventor: Shimizu, Hitoshi, c/o FUJIFILM CORPORATION, Ashigarakami-gun, Kanagawa (JP)
(74) Representative: Höhfeld, Jochen

(56) References cited:
- EP-A- 1 329 725
- EP-A- 1 460 422
- WO-A-2004/059301
- US-A- 5 055 263
- US-A- 5 537 880
- US-A1- 2004 112 529
- US-B1- 6 370 942

## Description

### BACKGROUND OF THE INVENTION

### 1. Field of the Invention

The present invention relates to an assay system according to the preamble of claim 1. More particularly, the present invention relates to a system including an assay apparatus for assay in utilizing attenuated total reflection.

### 2. Description of the Related Art

An assay apparatus for assay in utilizing attenuated total reflection is used for various kinds of studies in a biochemical field or the like, for example to study interaction of protein, DNA and various biomaterials, and to select candidate drugs by screening. Also, the technique is useful in the fields of the clinical medicine, food industries and the like.

A surface plasmon resonance (SPR) sensor is known as an assay apparatus in utilizing attenuated total reflection. Surface plasmon is a term to mean the compressional wave created on the surface of the metal and included in plasmon as quantized expression of the compressional wave. Free electrons in a metal vibrate to generate the compressional wave.

U.S. Pat. No. 5,164,589 and 5,313,264 (corresponding to JP-B 3294605) discloses the SPR assay apparatus with Kretschmann configuration. In the assay apparatus, the sensing surface is positioned opposite to an interface where a metal thin film is connected with a dielectric block. The sensing surface is caused to create surface plasmon resonance. Reaction of samples is assayed by detecting the SPR on the sensing surface. Then total reflection of the illuminating light occurs.

Upon the total reflection created on the metal/dielectric interface, a small component of the light passes through the metal film without reflection, and penetrates to the sensing surface. A wave of the penetrating component is called an evanescent wave. Surface plasmon resonance (SPR) is created when frequency of the evanescent wave coincides with that of the surface plasmon. In response to this, intensity of the reflected light attenuates remarkably. In the assay apparatus, the attenuation in the reflected light reflected by the metal/dielectric interface is detected, to recognize creation of the SPR on the sensing surface.

A sample or biomaterial, such as protein, is handled as sample fluid for the purpose of preventing deactivation or modification due to drying. The sample fluid contains biomaterial and fluid medium, examples of which include pure water, physiological saline water, liquid buffer and the like. U. S. Pat. No. 5,164,589 and 5,313,264 (corresponding to JP-B 3294605), for assay of reaction of a sample or biomaterial, suggests a use of a flow channel which is positioned on a sensing surface and where a sample fluid flows. A body of the assay apparatus has an assay stage. A sensor unit of a chip type includes a glass substrate and a thin film of metal formed thereon, and is placed on the assay stage for assay.

In the above indicated patent, tubes or conduits are connected with pumps, valves and the like, to cause the sample fluid to flow from a reservoir directly to the flow channel. However, there is a problem in risk of contamination caused by mixing of residual sample in the conduits with the sample fluid.

A suggested SPR assay apparatus includes pipette devices each of which has a pipette tip and a pipette head. The pipette tip has a partially conical surface, and has an end opening. The pipette head is connected with and supports the pipette tip in a removable manner. The sample fluid or other liquids are introduced from a reservoir to the flow channel of the sensor unit. The pipette tip is detipped for renewal at each time of a change of the liquids, so a contamination of the liquids is prevented in introduction to the flow channel.

The SPR assay apparatus is used with a sensor unit, which includes a flow cell, a prism and a sealing mechanism. The flow cell includes the flow channel. The prism is provided with the thin film of metal. The sealing mechanism seals the flow cell by fastening a lower surface of the flow cell on an upper surface of the prism. Namely, the thin film is opposed to the flow channel. The flow channel is a path penetrating the flow cell in a U shape. The pipette devices are inserted in end orifices of the flow channel. A first one of the pipette devices aspirates to draw and remove the liquid or air from the flow channel. A second one of the pipette devices dispenses the liquid. Thus, the liquid in the flow channel is exchanged.

A syringe pump is associated with each one of the pipette devices, and includes a cylinder and a piston. The piston is so controlled with in a synchronized manner that a first one of the pipette devices at the flow channel is driven for aspiration and a second one of the pipette devices at the flow channel is driven for dispensation simultaneously. To this end, a cam mechanism is used.

There is a problem in the course of pulling away the pipette devices from the flow channel. The liquid of a small amount is likely to lead from the pipette devices to enter the flow channel in an unwanted manner. Contamination will occur if the sample fluid to be discharged enters the flow channel on the aspirating side. Furthermore, shock occurs upon a drop of droplets of liquid in the flow channel, to create electric noise of a detection signal. However, no solution is known for removing influence of electric noise.

EP 1 460 422 discloses a fluid dispenser having a pipette device group including plural pipette devices. The pipette device group includes a first and a second needle head, each head being horizontally and vertical movable in an independent manner. A pump unit is associated to each needle head. The two needle heads and the associated pump units can be controlled independently in accordance with a specific test method.

This prior art fluid dispenser is specifically designed to deliver fluid to or withdraw fluid from a collection receptacle. Each needle of the needle heads comprises a coaxial structure. In order to avoid undesirable increased pressure within the inner needle through which the fluid is conveyed, there is a connection between the inner needle and the outer needle so that air can flow in order to equalize pressure. As an alternative, instead of a structure which includes an inner needle and an outer needle, a second needle may be provided in addition to a first needle, the second needle being adapted for venting ([0023] and [0024] of EP '422).

US 6,370,942 B1 discloses a pipetting system having a single pipette and a pressure detecting mechanism in order to check partial or complete clods and the like.

WO 2004/059301 discloses an assay system in accordance with the preamble of claim 1. The fluid dispenser of this prior art assay system comprises a pipette device group which may have one or may have two pipette devices, in case of two pipette devices, one pipette device communicates with one orifice of the flow channel and is connected to a pump, while the second pipette device is connected to a second orifice of the flow channel is connected to an aspirating device (claims 9, 11 and 12 of the WO document).

### SUMMARY OF THE INVENTION

In view of the foregoing problems, an object of the present invention is to provide an assay system of the type defined by the preamble of claim 1, which has a fluid dispenser,in which leakage of fluid can be prevented.

In order to achieve the above and other objects and advantages of this invention, an assay system is provided which has the features of claim 1.

Preferred embodiments are defined by the dependent claims.

### BRIEF DESCRIPTION OF THE DRAWINGS

The above objects and advantages of the present invention will become more apparent from the following detailed description when read in connection with the accompanying drawings, in which:
Fig. 1A is an explanatory view in section, illustrating a process of a sample immobilizing flow;
Fig. 1B is an explanatory view in section, illustrating processes of assay and data analysis;
Fig. 2 is an explanatory view in a perspective view, illustrating measuring and reference regions on a sensing surface;
Fig. 3 is an exploded perspective illustrating a sensor unit;
Fig. 4 is a block diagram illustrating a sample immobilizing apparatus;
Fig. 5 is a flow chart illustrating a sequence of fluid dispensation;
Fig. 6 is a graph illustrating changes in levels of inner pressure with time;
Fig. 7 is a cross section illustrating one preferred multiple pipette assembly in a multichannel form;
Fig. 8 is a cross section illustrating another preferred multiple pipette assembly;
Fig. 9 is a perspective view illustrating an example, not covered by the claims;
Fig. 10 is a perspective view illustrating an example, not covered by the claims;
Fig. 11 is a perspective view illustrating a sensor unit;
Fig. 12 is an exploded perspective view illustrating the sensor unit;
Fig. 13 is a cross section illustrating a flow channel of the sensor unit;
Fig. 14 is an explanatory view in perspective, illustrating a path of illuminating light together with measuring and reference regions;
Fig. 15 is a cross section illustrating a fluid dispenser;
Fig. 16 is a block diagram illustrating an optical assay unit of the assay apparatus;
Fig. 17 is a block diagram illustrating a controller and its relevant elements;
Fig. 18 is a chart illustrating a correction table;
Fig. 19 is a flow chart illustrating steps in assay;
Fig. 20 is a flow chart illustrating delivery of analyte;
Fig. 21 is an explanatory view in perspective, illustrating another preferred fluid dispenser; and
Fig. 22 is a chart illustrating a correction table.

### DETAILED DESCRIPTION OF THE PREFERRED

### EMBODIMENT(S) OF THE PRESENT INVENTION

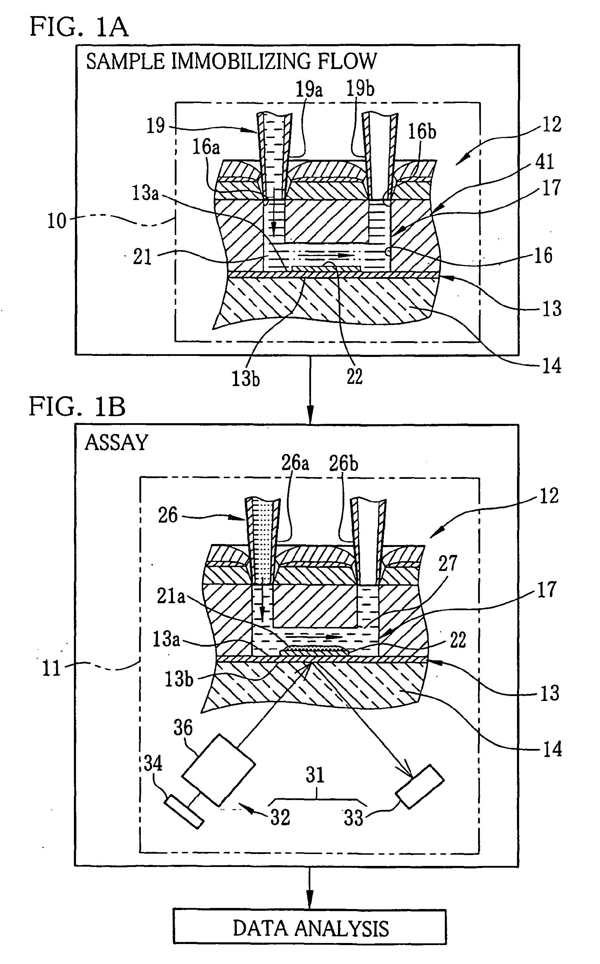

In Figs. 1A and 1B, a surface plasmon resonance (SPR) assay system is schematically illustrated. The assay system includes a sample immobilizing apparatus 10, an assay apparatus 11 and a data analyzer. The sample immobilizing apparatus 10 introduces fluid of ligand toward a sensing surface for the purpose of immobilizing the ligand. The assay apparatus 11 assays interaction between the ligand and an analyte introduced after the ligand immobilization. The data analyzer is provided with data from the assay apparatus 11, and analyzes the data.

An SPR sensor unit 12 is used for surface plasmon resonance (SPR) assay. The sensor unit 12 includes a metal film or thin film 13, a prism 14 as dielectric medium, and a flow cell 41. A first surface of the thin film 13 is a sensing surface 13a where surface plasmon resonance is generated. A second surface of the thin film 13 is an interface 13b defined by connection with the prism 14, and receives light of incidence. A flow channel 16 is formed in the flow cell 41, and causes sample fluids, such as ligand fluid and analyte fluid.

An example of material for the thin film 13 is gold (Au) or the like. A thickness of the thin film 13 is 50 nm. The thickness can be changed for the suitability in view of the material of the thin film 13, a wavelength of light to be applied, and the like. The prism 14 is a transparent dielectric block, and overlaid with the thin film 13. Illuminating light is condensed by the prism 14 for application to the interface 13b to satisfy the total reflection condition. The flow channels 16 are in the U shape. Ends of the flow channels 16 respectively include a first orifice 16a and second orifice 16b. The first orifice 16a receives introduction of a sample fluid. The second orifice 16b is accessed for draining the sample fluid. A horizontal width or diameter of the flow channels 16 is approximately 1 mm. An interval between the first and second orifices 16a and 16b of the flow channel 16 is approximately 10 mm.

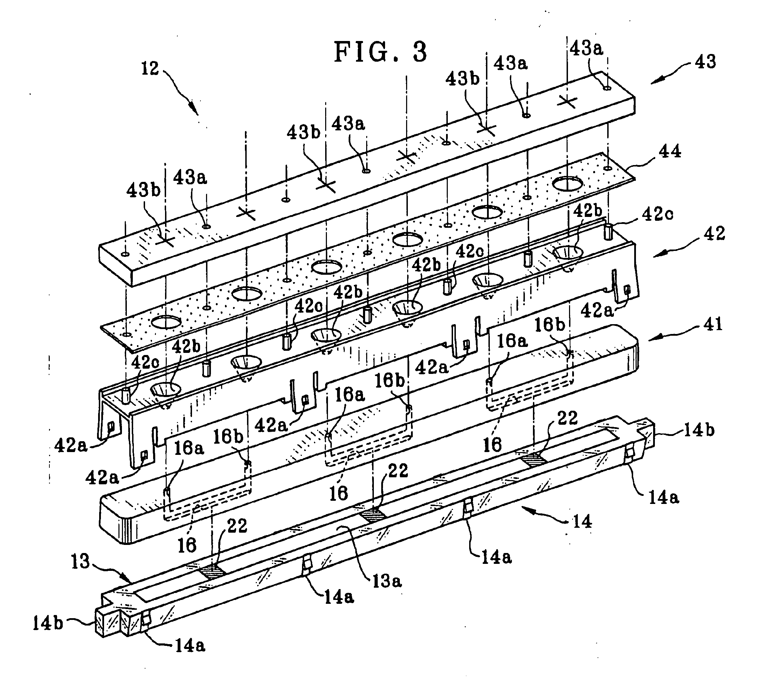

A lower side of the flow channels 16 where the flow cell recess is open is enclosed by the prism 14 having the sensing surface 13a. There are defined sensor cells or measuring cells 17 each of which is a portion of the sensing surface 13a closed by the portion about the recess. In the present embodiment, the sensor unit 12 has plural sensor cells 17, for example three. See Fig. 3.

A sample immobilizing flow is for binding of ligand on the sensing surface 13a. At first, the sensor unit 12 is set in the sample immobilizing apparatus 10. A multiple pipette assembly 19 as fluid dispenser is included in the sample immobilizing apparatus 10, and has a first pipette device 19a and a second pipette device 19b. The first pipette device 19a is set at the first orifice 16a. The second pipette device 19b is set at the second orifice 16b. The first pipette device 19a introduces fluid to the flow channel 16. The second pipette device 19b aspirates and removes fluid from the flow channel 16. The introduction with the first pipette device 19a is at the same time as the removal with the second pipette device 19b. Ligand fluid 21 as sample fluid, as a fluid which contains ligand or biomaterial and fluid medium, is introduced through the first orifice 16a by the multiple pipette assembly 19.

Preferably, the pipette devices 19a and 19b are firmly connected with the orifices 16a and 16b. So substitution of the fluids can be smooth owing to forming one path with the flow channel 16 and the pipette devices 19a and 19b.

An immobilizing linker film 22 is overlaid on the thin film 13 at the center of the sensing surface 13a. The linker film 22 is previously produced in the course of manufacturing the sensor unit 12. As the linker film 22 is a basis for immobilizing the ligand, various materials are available for selective use according to the type of the ligand to be immobilized.

In the sample immobilizing apparatus 10, pre-treatment before a ligand immobilizing flow with the ligand fluid 21 is wetting of the linker film 22 by use of liquid buffer, and activation of the linker film 22 for the purpose of facilitating binding of the ligand to the linker film 22. An example of an immobilizing method is the amine coupling method. An example of material for the linker film is carboxy methyl dextran, to bind an amino-group contained in the ligand with the dextran directly by a covalent bond. An example of liquid for the activation is mixture of N'-(3-dimethylaminopropyl) carbodiimide hydrochloride (EDC) and N-hydroxy imide succinate (NHS). The sample immobilizing apparatus 10, after the activation, introduces liquid buffer for the ligand immobilizing flow to wash and clean the flow channel 16.

Various liquids are available for use as the liquid buffer for the ligand immobilizing flow, and solvent or diluent for the ligand fluid 21. Examples of the liquids include buffer liquids, or physiological saline water and other aqueous solutions of physiological salts, and pure water. It is possible according to a type of the ligand to determine suitably solution types and pH values of the solutions, and types of substances to be mixed, and their density. If a biomaterial is used as a ligand, physiological saline water is used of which pH value is kept neutralized. In the amine coupling method described above, the linker film 22 is electrified negatively because of the carboxy methyl dextran. In consideration of this, it is possible to use phosphatic buffered saline (PBS) solution having strong operation of buffer and containing phosphate salt at high density which is not physiological, because protein can be electrified positively for the purpose of facilitating binding with the linker film 22.

The sample immobilizing apparatus 10, after the activation and washing, introduces the ligand fluid 21 to the flow channel 16 for immobilization. Ligand 21a as sample such as biomaterial diffused in the ligand fluid 21, in introducing the ligand fluid 21, gradually migrates to and binds with the linker film 22. This is the ligand immobilizing flow of the ligand 21a on the sensing surface 13a. It is general that a step of the immobilization requires approximately one (1) hour, during which the sensor unit 12 is preserved in an environment conditioned suitably, for example at a conditioned temperature. Until the immobilization, the ligand fluid 21 in the flow channel 16 may be left to stand in a stationary state. However, the ligand fluid 21 can be preferably stirred or turbulently flowed for ensured fluidity in the flow channel 16. The stirring or turbulent flow can promote binding of the ligand 21a with the linker film 22, to raise an immobilized amount of the ligand 21a.

When the immobilization of the ligand 21a on the sensing surface 13a is completed, the sample immobilizing apparatus 10 draws and removes the ligand fluid 21 from the flow channel 16. Namely, the second pipette device 19b discharges the ligand fluid 21 by aspirating. After this, the sensing surface 13a is washed by introducing washing liquid into the flow channel 16. In the sample immobilizing apparatus 10, a blocking step is made after the washing. A blocking liquid is introduced into the flow channel 16, to deactivate the reaction group remaining without binding with the ligand. A preferable example of the blocking liquid is ethanol amine hydrochloride. After the blocking, the flow channel 16 is washed again. The sample immobilizing apparatus 10 introduces evaporation retardant to the flow channel 16 after the final washing. The sensor unit 12 is left to stand until the assay, with the sensing surface 13a humid on the evaporation retardant.

For the assay, the sensor unit 12 is set in the assay apparatus 11. A multiple pipette assembly 26 as fluid dispenser is installed in the assay apparatus 11, and structurally the same as the multiple pipette assembly 19 in the sample immobilizing apparatus 10. The multiple pipette assembly 26 introduces fluid to the flow channel 16 through the first orifice 16a. For the assay in the assay apparatus 11, at first, liquid buffer is introduced into the flow channel 16, and caused to flow continuously for a prescribed time. After this, analyte solution or analyte fluid 27, as a fluid which contains analyte and fluid medium that may be solvent, is introduced into the flow channel 16. Then liquid buffer is introduced again. Note that the flow channel 16 may be cleaned or washed before initially introducing the liquid buffer. Reading of data in a photo detector starts upon initially introducing the liquid buffer in order to detect a reference level of a signal. The reading is continued until the introduction of the liquid buffer at the second time after entry of analyte fluid 27. It is possible not only to detect the reference level that is a base line, but to assay the interaction or reaction between the analyte and the ligand, and to measure a signal until dissociation between the analyte and ligand in response to introduction of the liquid buffer.

Various liquids are available for use as the liquid buffer for assay, and solvent or diluent for the analyte fluid 27. Examples of the liquids include buffer liquids, or physiological saline water and other aqueous solutions of physiological salts, and pure water. It is possible according to a type of a ligand or analyte to determine suitably solution types and pH values of the solutions, and types of substances to be mixed, and their density. To facilitate dissolving of the analyte, dimethyl sulfo-oxide (DMSO) can be added to the physiological saline water. The use of the DMSO considerably influences to a level of an output signal. The buffer for assay is used for detecting the reference level of the signal, as described above. If DMSO is contained in the fluid for the analyte, it is preferable to use buffer for assay at a DMSO density approximately equal to that of the fluid in the analyte.

In general, the analyte fluid 27 may be kept preserved for a long time, for example one (1) year. It is likely that a difference occurs between an initial level and a current level of the DMSO density owing to a change with time. If assay with high precision is required, such a difference in the density is estimated according to the reference signal (ref-signal) level upon introducing the analyte fluid 27, so that measured data can be compensated for by DMSO density compensation.

The reference signal or ref-signal is an output of the SPR derived from the reference region on the sensing surface 13a and free from immobilization of a ligand, and is a basis of comparison with a measuring signal. The measuring signal or act-signal is an output of the SPR derived from the measuring region on the sensing surface 13a and for immobilization of a ligand to react with an analyte. The data analyzer effects data analysis by obtaining a data of a finite difference between the act-signal and ref-signal, and analyzes various items according to the finite difference. This makes it possible to cancel electric noise caused by external irregularities, such as individual specificity of the sensor unit 12 or the linker film 22 or the sensor cells 17, mechanical changes of the assay apparatus 11, temperature changes of the liquid, and the like. A signal with a high S/N ratio can be obtained.

Compensation data for the DMSO density compensation is obtained before introducing the analyte fluid 27. A plurality of liquid buffers different in the DMSO density are introduced to the sensor cells 17. Amounts of changes in the levels of ref-signal and act-signal are evaluated so as to obtain the compensation data.

An optical assay unit 31 is constituted by the illuminator 32 and a photo detector 33. The reaction between the ligand and analyte can be recognized as a change of a resonance angle, which is an angle of incidence of light received by the interface 13b. To this end, the illuminator 32 is caused to apply light to the interface 13b at various values of angles of incidence satisfying a condition of the total reflection. The illuminator 32 includes a light source 34 and an optical system 36, which includes a condensing lens, a diffusing plate and a polarizer. A position and angle of installation of those elements are so determined that an angle of incidence of the light satisfies the condition of the above total reflection.

Examples of the light source 34 include a light emitting diode (LED), laser diode (LD), super luminescent diode (SLD), and other light emitting element. A single element is used as the light source 34 as a point light source, to illuminate the interface 13b in a sensor cell. Note that, if simultaneous assay of plural sensor cells is desired, light from a single light source device may be separated into plural light paths for application to the sensor cells. Alternatively, a plurality of light source devices may be arranged for association with respectively the sensor cells.

The diffusing plate diffuses light from the light source 34, and suppresses onset of irregularity in the light amount. The polarizer allows only p-polarized light to pass, the p-polarized light creating the surface plasmon resonance. Note that no polarizer is required if directions of rays emitted by the light source 34, for example an LD, are kept equal. However, a diffusing plate may be combined with the light source 34 of a type of which directions of emitted rays are kept equal. Directions of rays in polarization are changed to an unequal state by the passage through the diffusing plate. For this structure, the polarizer can be utilized to set equal the directions of the rays. The light obtained after the diffusion and polarization is condensed by a condensing lens, and directed to the prism 14. It is possible to travel rays with various angles of incidence toward the interface 13b without irregularity in the intensity.

The photo detector 33 receives light reflected by the interface 13b of the thin film 13, and detects intensity of the light. Rays of light are incident upon the interface 13b at various angles. The light is reflected by the interface 13b at various angles of reflection according to the angles of the incidence. The photo detector 33 receives the light at various angles of the reflection. When a medium in contact with the sensing surface 13a changes, the refractive index also changes. The angle of incidence of light with attenuation of reflected light is changed. When the analyte fluid is introduced to the sensing surface 13a, a resonance angle changes according to interaction between the analyte and the ligand. A reflection angle of attenuation of the light also changes.

An example of the photo detector 33 is a CCD area sensor or an array of photo diodes, which receives light reflected by the interface 13b at various angles of reflection, and photoelectrically converts the light into an output of SPR. The interaction between the ligand and analyte is recognized as information of shifting of a position of attenuation of the reflected light on the photo reception surface of the photo detector 33. A refractive index of the thin film with the sensing surface 13a of the linker film becomes different between the states before and after the contact of the ligand with the analyte. Thus the resonance angle at which surface plasmon resonance occurs changes between those states. When reaction starts by the contact between the analyte and ligand, the resonance angle starts changes, to start shifting the attenuation position of the reflected light on the photo reception surface. The photo detector 33 outputs and sends an SPR signal to the data analyzer. The data analyzer analyzes the SPR output from the assay apparatus 11, to recognize interaction between the analyte and ligand.

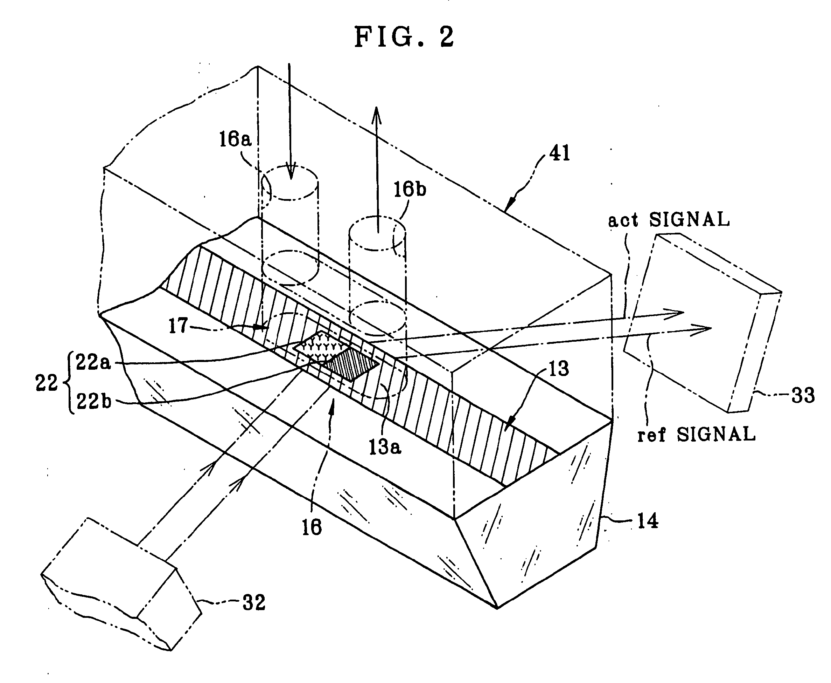

Note that in Fig. 2, the illuminator 32 and the photo detector 33 in the optical assay unit 31 are positioned so that a direction of light projected and reflected between those intersects horizontally with a flow of the flow channel 16, which is unlike the structure depicted in Fig. 1B. The state of Fig. 1B is simplified for the convenience. However, in the invention the illuminator 32 and the photo detector 33 may be positioned according to in Fig. 1B so that a direction of light projected and reflected between those is horizontally aligned with the flow of the flow channel 16 between the pipettes.

In Fig. 2 with the linker film 22, there are a measuring region 22a (act) and a reference region 22b (ref) formed in the linker film 22. The measuring region 22a has immobilization of a ligand, and is a region for reaction between the ligand and analyte. The reference region 22b does not have immobilization of a ligand, and is used for outputting a reference signal for comparison with a signal retrieved from the measuring region 22a. Note that the reference region 22b is formed in the course of film production of the linker film. An example of a process of the forming has steps of surface processing of the linker film 22 at first, and then deactivating the reaction groups in approximately a half of an entire area of the linker film 22 for binding with ligand. Thus, a half of the linker film 22 becomes the measuring region 22a. A remaining half of the linker film 22 becomes the reference region 22b.

The photo detector 33 outputs an act-signal for the measuring region 22a, and a ref-signal for the reference region 22b. The act-signal and ref-signal are simultaneously measured in a period between the detection of the reference level, association and dissociation. In the data analysis, a difference or ratio between the act-signal and ref-signal is calculated. For example, the data analyzer obtains measuring data of a finite difference between the act-signal and ref-signal, and analyzes the detection according to the finite difference data. It is possible to cancel electric noise caused by external irregularities, such as individual specificity of the sensor unit 12 or the linker film 22, mechanical changes of the assay apparatus 11, temperature changes of the liquid, and the like. Assay with high precision is possible.

The illuminator 32 and the photo detector 33 are constructed for measurement of two signal channels of the act-signal and ref-signal. To this end, a mirror for reflection is associated with the illuminator 32, for separating light from a single light-emitting element into plural light paths which are directed to the measuring and reference regions 22a and 22b. The photo detector 33 is constructed by photo diode arrays each of which is associated with one of the two signal channels, and receives the light on the light paths.

If a CCD area sensor is used as the photo detector 33, reflected light of the dual channels received at the same time can be recognized as an act-signal and ref-signal by the image processing. However, such a method according to the image processing might be too difficult. Alternatively, signals of the signal channels can be received by differentiating the time sequence for a very small period of time of the incidence between the measuring and reference regions 22a and 22b. An example of differentiating the time sequence is a use of a disk disposed on a light path and having two holes positioned at 180 degrees of a rotational angle. The disk is rotated to shift the time sequence between the signal channels. The holes are disposed at a difference of the radius from the rotational center in association with the interval between the measuring and reference regions 22a and 22b. When a first one of the holes enters the light path, illuminating light travels to the measuring region 22a. When a second one of the holes enters the light path, the light travels to the reference region 22b.

In Fig. 3, the sensor unit 12 is illustrated structurally. The sensor unit 12 includes the flow cell 41, the prism 14, a sealing mechanism 42, and a flow cell lid 43. The flow cell 41 has the three flow channels 16 formed through the same, or at least one flow channel. The prism 14 is dielectric, and is overlaid with the thin film 13 on its upper surface. The sealing mechanism 42 keeps the flow cell 41 positioned by fitting its lower surface on the upper surface of the prism 14. The flow cell lid 43 is disposed higher than the sealing mechanism 42.

The number of the flow channels 16 is three in the flow cell 41. The flow cell 41 extends in one direction, in which the flow channels 16 are arranged. The flow channels 16 constitute the sensor cells 17 together with the thin film 13 in connection with its lower surface. See Figs. 1A and 1B. The flow cell 41 is formed from elastic material for the purpose of ensuring tightness in contact with the thin film 13. Examples of elastic materials include rubber, polydimethylsiloxane (PDMS), and the like. When the lower surface of the flow cell 41 is pressed on an upper surface of the prism 14, the flow cell 41 is elastically deformed, to remove a space between its surface and the thin film 13. Open lower portions of the flow channels 16 are closed fluid-tightly by the upper surface of the prism 14. Note that, in the sensor unit 12, the number of the flow channels 16 may not be three, but can be one or two, or four or more.

The thin film 13 is formed by vapor deposition on the prism 14. The thin film 13 of a strip shape is positioned on a train of the flow channels 16. Also, the linker film 22 is formed on the upper surface of the thin film 13 for the flow channels 16. Retention claws 14a are formed to project from the prism 14 at its sides as viewed longitudinally. Retention portions 42a of the sealing mechanism 42 are engageable with the retention claws 14a. The flow cell 41 is sandwiched between the sealing mechanism 42 and the prism 14. A lower surface of the flow cell 41 is kept fitted on the prism 14. A unit including the flow cell 41, the thin film 13 and the prism 14 is obtained.

Engageable projections 14b protrude from ends of the prism 14 as viewed in its longitudinal direction. A sensor holder (not shown) contains a plurality of sensor units 12 in the course of the sample immobilizing flow. The engageable projections 14b are formed for positioning the sensor unit 12 in a contained state by engagement with the sensor holder.

Various materials can be used for forming the prism 14, their examples including optical glasses, such as borosilicate crown (BK7) glass, barium crown (Bak4) glass, and the like; and optical plastic materials, such as polymethyl methacrylate (PMMA), polycarbonate (PC), amorphous polyolefin (APO) and the like.

A passage aperture 42b is formed in the sealing mechanism 42, and positioned at each of the first and second orifices 16a and 16b of the flow channel 16, for entry of an end of each of the pipette devices 19a and 19b, and pipette devices 26a and 26b. The passage aperture 42b has a funnel shape with a decreasing diameter for introducing liquid ejected by the pipette toward the first orifice 16a. A lower face of the passage aperture 42b is connectable with each of the first and second orifices 16a and 16b of the flow channel 16 for flow of fluid with the sealing mechanism 42.

Rod shaped bosses 42c are formed to project beside the passage aperture 42b. Positioning holes 43a are formed in the flow cell lid 43. The bosses 42c are fitted in the positioning holes 43a, to position the flow cell lid 43 firmly. Double sided adhesive tape 44 attaches the flow cell lid 43 to an upper surface of the sealing mechanism 42. Note that suitable holes are formed in the double sided adhesive tape 44, and associated with the passage aperture 42b and the bosses 42c.

The flow cell lid 43 covers the passage aperture 42b communication to the flow channel 16, and prevents evaporation of liquid in the flow channel 16. The flow cell lid 43 is formed from rubber, elastomer, resin or other elastic material. A cross shaped slit 43b is formed in the flow cell lid 43 and positioned respectively at the passage aperture 42b. The flow cell lid 43 is required to cover the passage aperture 42b in order to prevent liquid in the flow channel 16 from evaporation. However, no pipette can enter the passage aperture 42b if covering of the flow cell lid 43 is complete. So the cross shaped slit 43b is formed to enable insertion of pipettes, and to close the passage aperture 42b while no pipette is inserted. If a pipette is forcibly pressed into the cross shaped slit 43b, its edges are elastically deformed, to allow receipt of the pipette by becoming open. See Figs. 1A and 1B. When the pipette is externally pulled out, the cross shaped slit 43b elastically closes the passage aperture 42b again by returning to its initial state.

Note that an RFID tag (radio frequency identification tag) as a non-contact IC memory may be used with and secured to any one elements in the sensor unit 12 such as the prism 14 and the sealing mechanism 42. An ID number for the sensor unit 12 is stored in the RFID tag of the read only type. The ID number is read out at each time before operation of one of sequential processes, so the sensor unit 12 can be identified. It is possible to prevent failure or errors in simultaneous immobilization and assay of plural sensor units, such as erroneous introduction of analyte fluid, misreading of results of measurement. Also, the RFID tag may be a writeable type. Information can be written to the RFID tag in sequential processes, such as types of immobilized ligand, date of immobilization, types of analytes used in the reaction, and the like.

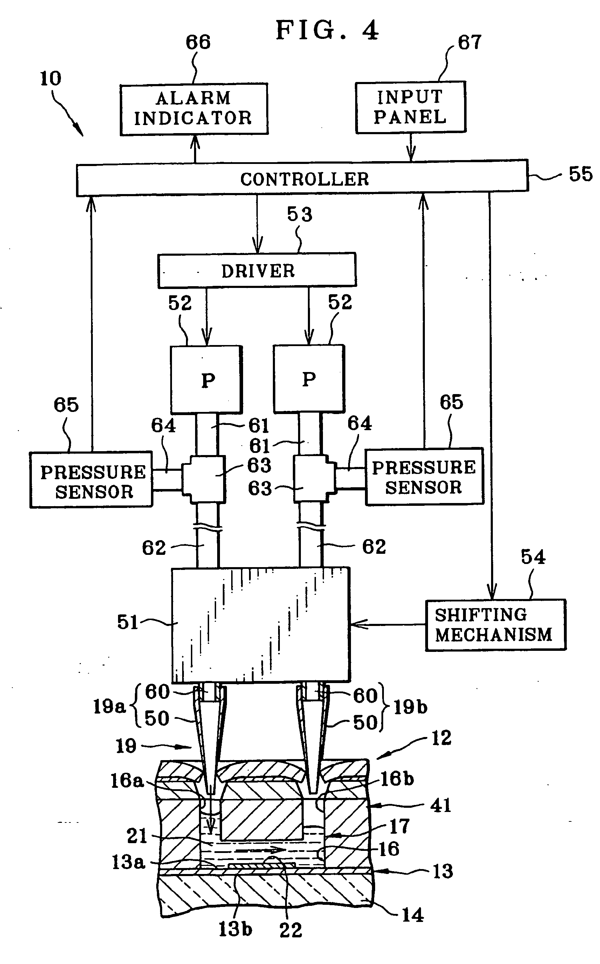

In Fig. 4, the sample immobilizing apparatus 10 is structurally illustrated. The sample immobilizing apparatus 10 includes a pipette head 51, pumps 52, a pump driver 53 to constitute a pump controller, a shifting mechanism 54, and a controller 55 to constitute the failure checking unit and pump controller. Pipette tips 50 for fluid dispensation are supported on the pipette head 51 in a removable manner. The pumps 52 are connected with the pipette head 51, pressurize or decompress inner fluid inside the pipette tips 50, for dispensation and aspiration of fluid. The pump driver 53 drives the pumps 52. The shifting mechanism 54 shifts the pipette head 51 three-dimensionally, forwards and backwards, to the right and left, and up and down. The controller 55 controls various relevant elements in the sample immobilizing apparatus 10.

Two pipette nozzles 60 are formed in the pipette head 51 to protrude in a tubular shape. An outer diameter of the pipette nozzles 60 is substantially equal to an inner diameter of the pipette tips 50. The pipette tips 50 are retained on the pipette head 51 by mechanically engaging with the pipette nozzles 60 when fitted on respectively the pipette nozzles 60. Thus, the pipette devices 19a and 19b are constructed by engaging the pipette tips 50 with respectively the pipette nozzles 60. A release mechanism (not shown) for detipping is associated with the pipette head 51, and movable to remove the pipette tips 50 from the pipette head 51 by pushing down the pipette tips 50 at the pipette nozzles 60. The pipette tips 50 are detipped for renewal so as to prevent mixture and contamination of plural liquids in the pipette tips 50 in direct contact with flowing liquid.

An example of the pumps 52 associated with the pipette devices 19a and 19b is a syringe pump, which includes a cylinder and a piston. There are conduits 61 and 62, which connect the pumps 52 to the pipette nozzles 60 in cooperation with the pipette head 51. The pumps 52 decompress an inner space in the path extending to the pipette nozzles 60, and cause the pipette devices 19a and 19b to aspirate fluid. Also, the pumps 52 pressurize the inner space in the path, and cause the pipette devices 19a and 19b to eject and dispense fluid. A fork shaped distributor 63 is connected between the conduits 61 and 62. The distributor 63 divides the flow from the conduit 62 at a changeable inner pressure into two paths. A first one of two paths extends to the pipette head 51 through the conduit 62. A second path extends to a pressure sensor 65 through a conduit 64.

The pressure sensor 65 receives a level of inner pressure applied by the pumps 52 to the inner space, and converts the inner pressure level to an electric signal, which is output to the controller 55. Examples of the pressure sensor 65 include a semiconductor diaphragm pressure sensor, electrostatic capacity pressure sensor, and other pressure sensors of types well-known in the art.

The controller 55 sends the pump driver 53 drive signals for the pumps 52, to control sequences of dispensation and aspiration, and amounts of fluids of dispensation and aspiration. The pump driver 53 drives the pumps 52 individually according to drive signals from the controller 55, for flow of fluid through the pipette devices 19a and 19b. The pump driver 53 and the controller 55 are included in the pump controller as a feature of the invention. At this time, the controller 55 effects feedback control to a drive signal for the pumps 52 according to information of measured inner pressure from the pressure sensor 65. Consequently, the pipette devices 19a and 19b can be caused to dispense and aspirate fluid correctly at the predetermined inner pressure.

Also, the controller 55 checks whether the measured inner pressure of the pipette devices 19a and 19b is acceptable. If leakage of fluid occurs at insertion portions of the pipette tips 50, a measured inner pressure is considerably lower than the target pressure. If a choked state occurs in the pipette tips 50, a measured inner pressure is higher than the target pressure. Thus, it is possible to detect an error or failure in the fluid dispensation by measuring the inner pressure detection signal. An example of failure is a situation where the measured inner pressure is not within a predetermined tolerable range according to a target pressure.

An alarm indicator 66 and an input panel 67 are connected with the controller 55. The controller 55 turns on the alarm indicator 66 when measured inner pressure is a level that is abnormal, to generate an alarm signal notifying failure in the inner pressure of the pipette devices 19a and 19b. This is a setting of a treating process. An example of the alarm indicator 66 is two light sources associated with respectively the pipette devices 19a and 19b for selective information of each one or both. Examples of elements in the input panel 67 include a keyboard, mouse, touch panel and other input devices for entry of information to the sample immobilizing apparatus 10.

The shifting mechanism 54 is a moving device and may include a conveyor belt, pulleys, a carriage and a motor. The controller 55 controls the shifting mechanism 54 to move the pipette head 51 in a three dimensional manner. The sample immobilizing apparatus 10 includes plural fluid reservoirs and pipette tip storage (not shown). The fluid reservoirs include various fluids for delivery into the flow channels 16, such as ligand fluid, washing liquid, buffer liquid for immobilization, evaporation retardant, and blocking liquid. The pipette tip storage stores the pipette tips 50. The shifting mechanism 54 causes the pipette head 51 to access to those elements or to the sensor unit 12 in the sample immobilizing apparatus 10.

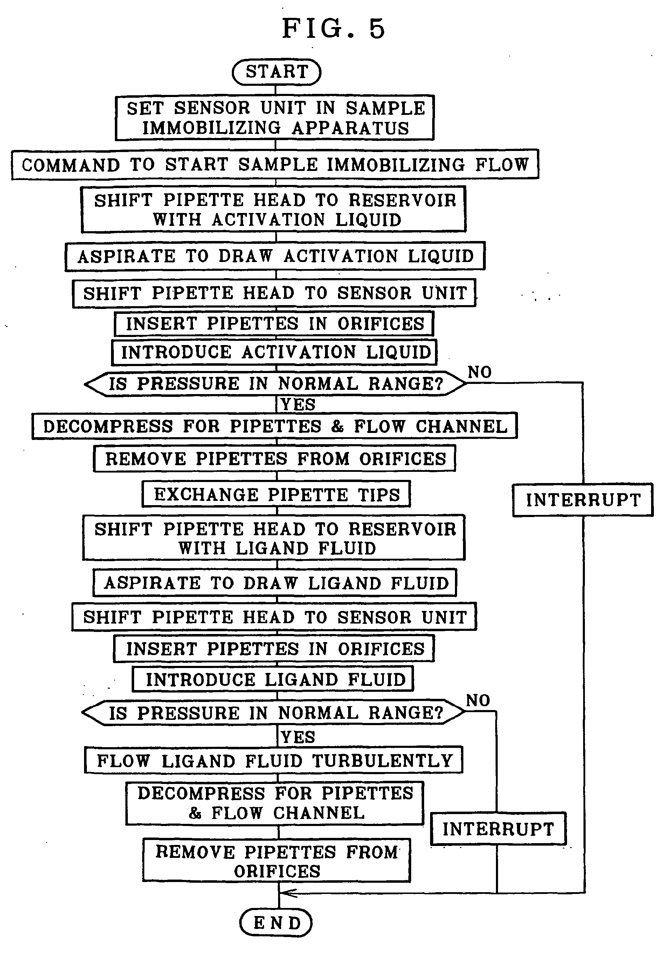

The operation of the sample immobilizing apparatus 10 constructed above is described by referring to a flow in Fig. 5. Before sample immobilization to the sensor unit 12, at first the sensor unit 12 is inserted in a holder (not shown), which is set in an installing space of the sample immobilizing apparatus 10. After this, the sample immobilizing apparatus 10 is started for sample immobilizing flow upon entry of a start signal at the input panel 67.

The controller 55 responds to an input of a command signal for start, and drives the shifting mechanism 54 to shift the pipette head 51 to a liquid reservoir which stores activation liquid for the linker film 22. The controller 55 causes the pump driver 53 to drive the pump 52 associated with the first pipette device 19a, which aspirates and draws the activation liquid at a regular amount. After this, the controller 55 moves the pipette head 51 to the sensor unit 12, and sets the multiple pipette assembly 19 at the first and second orifices 16a and 16b of the flow channel 16.

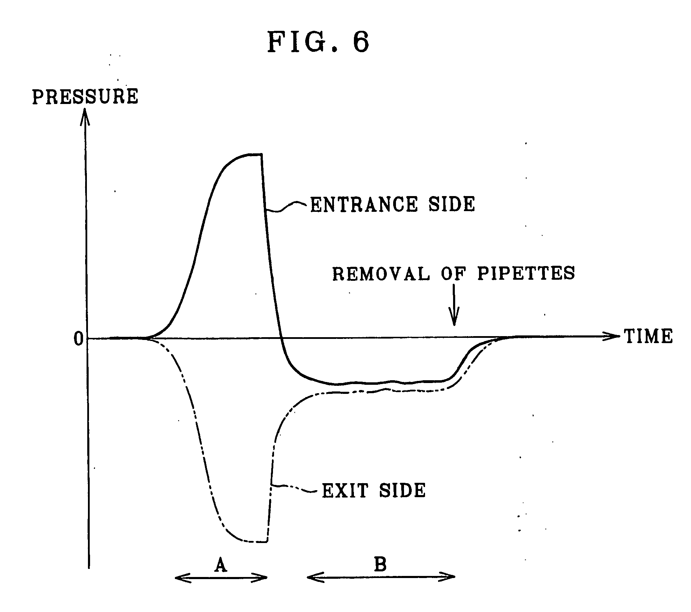

After the multiple pipette assembly 19 is set on the flow channel 16, the controller 55 actuates the pumps 52 for dispensation through the first pipette device 19a and aspiration through the second pipette device 19b. The first pipette device 19a dispenses activation liquid kept in the pipette tips 50, and introduces the same into the flow channel 16. The second pipette device 19b aspirates and sucks air or other liquid such as washing liquid from the flow channel 16 for removal. Within the flow channel 16, air or washing liquid is changed over to activation liquid by substitution, to active the linker film 22. In Fig. 6, force of aspiration of the second pipette device 19b can be set higher as indicated at the section A by the arrow so as to discharge air, liquid and other fluid in a forced manner. The fluid in the flow channel can be discharged reliably. It is possible to prevent failure in retrieval of fluid from the flow channel, and prevent mixture of the same with next fluid.

The controller 55 monitors outputs of the pressure sensor 65 while the multiple pipette assembly 19 is driven for aspiration and dispensation, and drives the pumps 52 according to feedback of drive signals so as to set the aspiration and dispensation at a target pressure. The pipette devices 19a and 19b can operate for aspiration and dispensation at the target pressure. A flow rate of the fluid and time of its dispensation can be managed precisely. Also, the controller 55 checks whether the detected inner pressure level is within an acceptable range according to the output from the pressure sensor 65. If the detected inner pressure level is not in the acceptable range, the controller 55 determines occurrence of failure such as leakage of fluid.

When the controller 55 detects failure in at least either one of the pipette devices 19a and 19b, the controller 55 stops the pump driver 53 from driving the pumps 52, for interrupt process to interrupt the flow of fluid to the flow channel 16 as treatment. The alarm indicator 66 is turned on to notify a user of occurrence of failure. The controller 55 is an element operating to control driving, to check failure, and as a fail-safe treating unit.

Consequently, a user can be prevented from missing a failing state before the end of the sample immobilizing flow, because alarm information is displayed and can notify him or her of occurrence of the failing state. Also, inspection, maintenance and repair can be quickly performed, so efficiency can be raised without waste of time. Also, a limiter can be additionally associated with the pumps 52 for regulating pressure under an upper limit, in order to prevent application of excessive pressure to the pipette devices 19a and 19b or the flow channel 16 even when the failure occurs.

After introduction of the activation liquid into the flow channel 16, the controller 55 drives the pumps for suction of a lower force at the pipette devices 19a and 19b, to decompress the space in the pipette devices 19a and 19b and the flow channel 16. See the section of the arrow B in Fig. 6. The controller 55 drives the shifting mechanism 54 in keeping the decompressed state, and pulls and removes the pipette devices 19a and 19b from the flow channel 16. As force of suction or aspiration is exerted in the pipette devices 19a and 19b, it is possible to prevent leakage of liquid through the ends of the pipette devices 19a and 19b. Also, a liquid surface of the liquid in the flow channel 16 is depressed by air when the state of the flow channel 16 comes back from the depression to the normal pressure of the atmosphere. Separation of liquid from the liquid in the pipette device 19a or 19b can be obtained adequately. Incidental drop of droplets of the liquid outside the pipette device 19a or 19b can be suppressed too.

After the removal of the pipette devices 19a and 19b from the flow channel 16, the controller 55 controls the pipette head 51 to move to a discarding receptacle, so the pipette tips 50 are released together with activation liquid contained therein. The controller 55 then moves the pipette head 51 to the pipette tip storage, and sets unused pipette tips 50 on the pipette nozzles 60. In this manner, the pipette tips 50 are detipped and renewed for the purpose of introduction of the ligand fluid 21. Note that it is possible to specialize the pipette tips 50 for plural fluids. To this end, the pipette tips 50 can be moved back to the pipette tip storage at each time of releasing the pipette tips 50, so as to handle fluids by use of the specialized pipette tips 50.

After exchange of the pipette tips 50, the controller 55 causes the pipette head 51 to shift to a fluid reservoir for the ligand fluid 21, and to draw the ligand fluid 21 by aspiration in the first pipette device 19a. The controller 55 causes the pipette head 51 with the ligand fluid 21 to shift to the sensor unit 12. Operation the same as that for the activation liquid follows. The pipette devices 19a and 19b are set for access to the flow channel 16. The ligand fluid 21 is introduced. Failure in the introduction of fluid is detected if any. Then the pipette devices 19a and 19b are removed from the flow channel 16. This is the ligand immobilizing flow of the ligand 21a on the sensing surface 13a. The ligand fluid 21 can be preferably stirred or turbulently flowed for ensured fluidity in the flow channel 16 by alternate repetition of aspiration and dispensation of the multiple pipette assembly 19. The stirring or turbulent flow can promote binding of the ligand 21a with the linker film 22, to raise an immobilized amount of the ligand 21a.

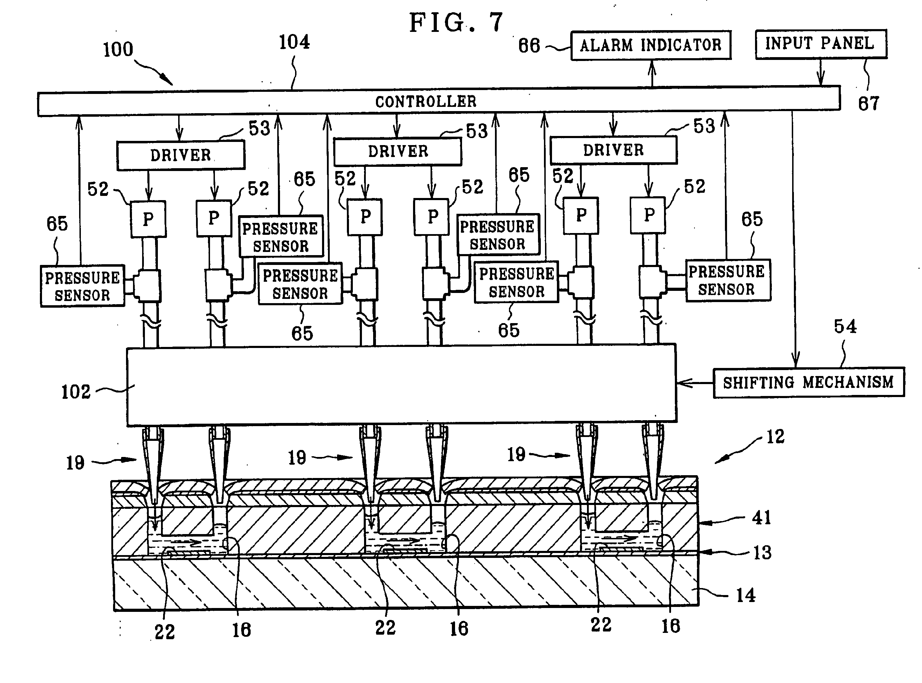

In Fig. 7, another preferred embodiment is illustrated, in which a plurality of the multiple pipette assemblies 19 are used. Elements similar to those of the above embodiments are designated with identical reference numerals. In Fig. 7, a sample immobilizing apparatus 100 includes a multichannel pipette head 102, the pumps 52, the pump driver 53, the shifting mechanism 54 and a controller 104 to constitute the pump controller. The multichannel pipette head 102 has three multiple pipette assemblies respectively settable at the flow channel 16 of the sensor unit 12. The shifting mechanism 54 moves the multichannel pipette head 102 three-dimensionally. The controller 104 controls various elements of the sample immobilizing apparatus 100. The alarm indicator 66 and the input panel 67 are connected with the controller 104.

When a start signal is input manually with the input panel 67, the controller 104 causes the sample immobilizing apparatus 100 to start for activating the linker film 22 and flow of ligand fluid to immobilize. The sample immobilizing apparatus 100 inserts the multiple pipette assemblies 19 to the flow channels 16 in the sensor unit 12, for simultaneous flow for sample immobilization. In the first embodiment, the multiple pipette assembly 19 of a dual pipette form is single in the pipette head 51. However, it is possible in the present embodiment to shorten the time for the sample immobilizing flow, because immobilization is possible simultaneously for the sensor cells 17 in a manner of multiple flow.

In introducing fluid to the flow channel 16, the controller 104 receives outputs from the pressure sensor 65, and checks whether inner pressure of the pipette devices 19a and 19b is acceptable or not, so as to detect presence or lack of failure in the dispensation, such as leakage of fluid. If the inner pressure is found unacceptable as failure, then the controller 104 stops dispensation of fluid in an associated one of the multiple pipette assemblies 19 with failure at the pipette device 19a or 19b. Also, the alarm indicator 66 is turned on to inform a user of occurrence of failure.

The controller 104 keeps the failing one of the multiple pipette assemblies 19 stopped until entry of a signal for restart with the input panel 67. It is possible to prevent inadvertent flow of fluid through the failing one of the multiple pipette assemblies 19 specifically when a plurality of the sensor units 12 are handled for sample immobilizing flow. Should a failing one of the multiple pipette assemblies 19 introduce fluid, the fluid is likely to enter the flow channel 16 and cause unwanted deactivation or modification of reaction groups of the linker film 22 before next detection of failure in the controller 104.

When reaction groups of the linker film 22 becomes modified or deactivated, no normal measurement is possible even if immobilization is tried again. But one of the multiple pipette assemblies 19 after detection of failure is kept stopped, so that unacceptable assay can be prevented without a start. Reliability of the sample immobilizing apparatus 100 can be high. Note that after occurrence of the stopped state, the problem caused by the failure is first solved, before a signal for restart can be input by a user with the input panel 67 for the recovery of the normal operation of the apparatus.

In the above embodiment, only a failing one of the multiple pipette assemblies 19 is stopped. However, it is possible to stop all of the multiple pipette assemblies 19 even upon detection of failure of at least one of the pipette devices 19a and 19b. However, the above embodiment of stopping only the failing one of the multiple pipette assemblies 19 is advantageous in rapid processing, because remaining ones of the multiple pipette assemblies 19 can continue the sample immobilizing flow without failure.

It is possible according to another construction to add a process of recovery after performing the treating process. Without manual operation of the input panel 67, the controller 104 upon entry of the fail-safe treating process automatically recovers the pipette devices 19a and 19b by removing the failing state. At the end of this, the treating process is terminated in the controller 104. Various examples are conceivable for the recovery process, including exchange of the pipette tips 50, washing of conduits from the pumps 52 to the pipette nozzles 60, and the like.

If the failure of the pressure of the pipette devices 19a and 19b is derived from choking of the pipette tips 50 or improper orientation of the pipette tips 50, the failure can be removed by exchanging the pipette tips 50. If the failure of the pressure of the pipette devices 19a and 19b is derived from sticking of foreign material inside conduits, the failure can be removed by cleaning up the conduits. To this end, washing liquid can be drawn in the pipette devices 19a and 19b, introduced in conduits, and then removed with the pipette devices 19a and 19b by aspiration.

It is unnecessary for a user to handle manually. Failure in the pressure of the pipette devices 19a and 19b can be eliminated automatically by the recovery process. A succeeding one sensor unit 12 can be subjected to immobilization. Note that the recovery process can be scheduled in any suitable sequence, for example immediately after diagnosing failure in the pressure with the controller 104, or after the sample immobilizing flow to the sensor unit 12 found failing. Also, selectable structure between automated and manual modes can be added. In the automated mode, the treating process can be terminated upon effecting the recovery process. In the manual mode, the input panel 67 is operable manually to terminate the treating process.

In the above embodiment, a fail-safe treating process is performed for stopping the pumps 52 and stopping flow of fluid to the flow channel 16. However, a fail-safe treating process of the invention is not limited, and may be associated with any suitable method relevant to alarm. For example, it is possible in a log to record history information related to failure, such as location of failing pipettes, time, sequence of failure in operation, types of fluids, and the like. The record makes it possible to discriminate the sensor cells 17 even after the assay, and to prevent unawareness of failure in the sample immobilizing flow. Furthermore, a treating process of the invention may be any one or both of the interrupt process and the information recording process.

In the embodiment, the alarm indicator 66 generates visual information. However, an alarm unit or alarm signal generator of any type may be used for generating an alarm signal, such as a display panel to display a message, a sound source to emit alarm sound, and the like.

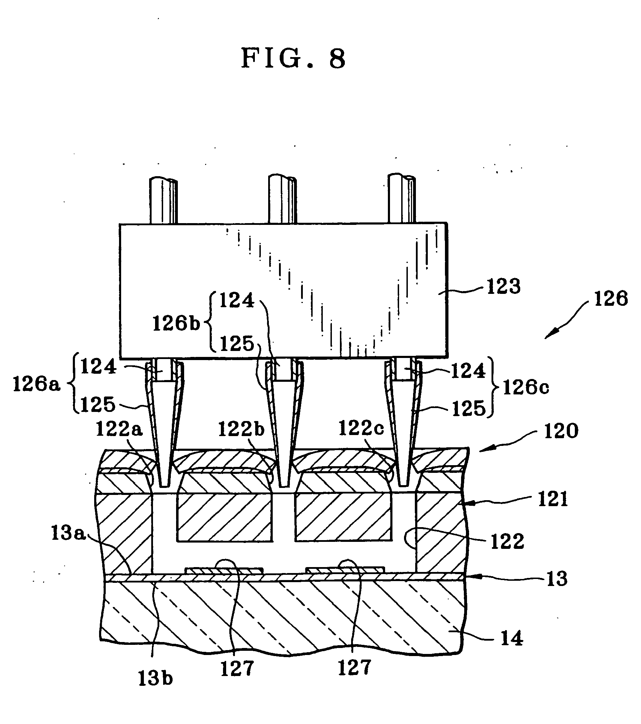

In the above embodiment, the pipette devices 19a and 19b are partially inserted in the flow channels 16 at the first and second orifices 16a and 16b. However, the number of the pipettes can be modified. In Fig. 8, a structure with three orifices and three pipettes is illustrated. An SPR sensor unit 120 for surface plasmon resonance (SPR) assay has a flow cell 121. A flow channel 122 is formed in the flow cell 121, and has orifices 122a, 122b and 122c. A multichannel pipette head 123 has three pipette nozzles 124. Pipette tips 125 are fitted on the pipette nozzles 124, so pipette devices 126a, 126b and 126c are constructed in a multiple pipette assembly 126. Two pieces of linker film 127 are overlaid on the inside of the sensor unit 120 between the orifices 122a, 122b and 122c. It is possible by a combined use of the pipette devices 126a-126c to send fluid to the linker film 127 at one time, or to send fluid individually.

In the above embodiments, the inner pressure control of the invention is applied in the multiple pipette assembly 19 of the sample immobilizing apparatus 10. Also, the inner pressure control of the invention can be applied in the multiple pipette assembly 26 of the assay apparatus 11.

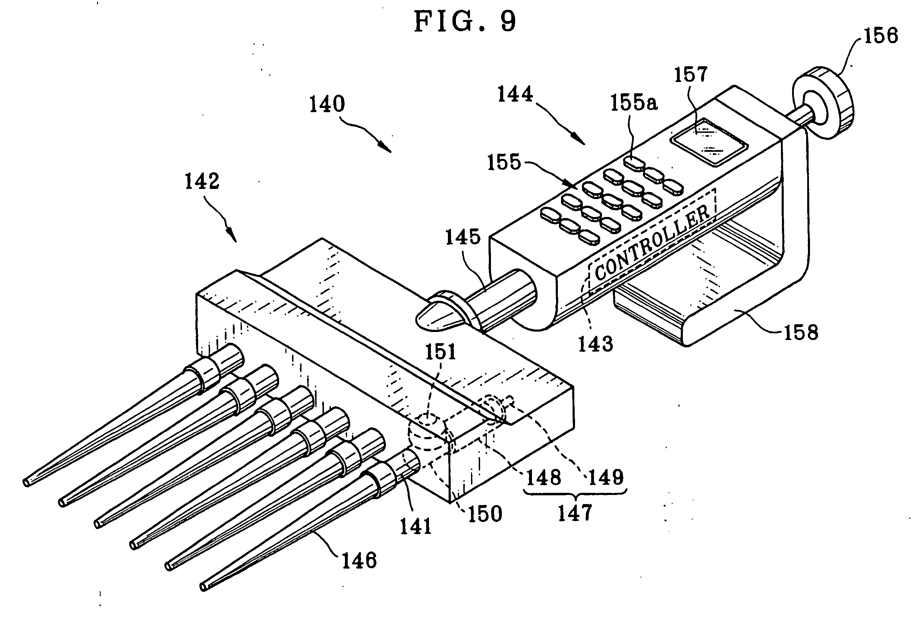

In Fig. 9, a portable type of pipetter 140 as fluid dispenser not covered by the invention as claimed is illustrated. The pipetter 140 includes a multichannel and composite pipette head 142, a user interface 144 or handset, and a connector 145. Six pipette nozzles 141 are arranged in an array on the pipette head 142, and dispense and aspirate fluid. A controller 143 to constitute a failure checking unit and pump controller is contained in a body with the user interface 144 for control of the pipette nozzles 141. The connector 145 has a rod shape, connects the user interface 144 with the pipette head 142 mechanically, and also contains wiring for connecting the user interface 144 with the pipette head 142 electrically.

Pipette tips 146 with a conical surface are fitted in the pipette nozzles 141. The pipette nozzles 141 keep the pipette tips 146 positioned on the composite pipette head 142 in a removable manner. A syringe pump 147 is contained in the pipette head 142, and associated with each of the pipette nozzles 141. There are a cylinder 148 and a plunger or piston 149 constituting the syringe pump 147. A moving mechanism for slide (not shown) is connected with the piston 149. The moving mechanism for slide is responsive to a drive signal from the controller 143, and slides the piston 149 to change the inner pressure in the cylinder 148. The pipette nozzles 141 dispense or aspirate fluid in response to the change in the inner pressure. An example of moving mechanism for slide can have a well-known mechanism, such as a rack and pinion mechanism. A fork shaped distributor 150 connects the syringe pump 147 to the pipette nozzles 141. The distributor 150 receives changeable inner pressure of the syringe pump 147, and transmits the inner pressure through two paths to the pipette nozzles 141 and to a pressure sensor 151. The pressure sensor 151 converts the inner pressure level of the syringe pump 147 into an electric signal, and outputs the signal to the controller 143.

The user interface 144 includes an input keypad 155, a start button 156 and a display panel 157. Various keys or buttons 155a are arranged in the input keypad 155, and operable for inputting information such as a setting of a mode of the pipetter 140. Examples of pipetting modes of the pipetter 140 include a one shot pipetting mode, a regular continuous mode and the like. The one shot pipetting mode is for dispensing at one time by aspirating a preset quantity of liquid in the pipette tips 146. The regular continuous mode is for dispensing liquid at plural times and the equal small amount.

The display panel 157 displays a region of a menu list. The operator views the display panel 157 and sets a selected one of the pipetting modes. The start button 156 is depressible to input a signal to the controller 143 for starting a flow of fluid. The controller 143 in response to the input of the signal controls the driving of the syringe pump 147 in the selected pipetting mode. There is a grip or hook 158 formed to protrude from the user interface 144 for reliable manual handling of an operator, and effective in preventing inadvertent drop while the user interface 144 is manually held for aspiration or dispensation of the pipetter 140.

It is possible with the pipetter 140 to insert ends of the pipette tips 146 in the flow channels 16 of the sensor unit 12, to obtain effects similar to those of the above embodiment.

In addition to the SPR sensor, an assay sensor unit according to the invention can be other sensor in utilizing attenuated total reflection. One example of sensor unit according to utilizing the attenuated total reflection is a leaky mode sensor. The leaky mode sensor includes a dielectric medium, a cladding layer overlaid on the dielectric medium, and an optical waveguide layer overlaid on the cladding layer, those layers constituting a thin film. A first surface of the thin film is a sensing surface on the optical waveguide layer. A second surface of the thin film is a metal/dielectric interface on the cladding layer. When light becomes incident on the metal/dielectric interface to satisfy the condition of the total reflection, part of the light passes through the cladding layer, and enters the optical waveguide layer. A guided mode to propagate light is excited responsively in the optical waveguide layer, to attenuate the reflected light on the metal/dielectric interface. An angle of the incidence at which the guided mode is excited is changeable according to the refractive index of the medium positioned on the sensing surface. This is similar to the characteristic of the resonance angle of the SPR sensor. The attenuation of the reflected light is detected, so that it possible to measure the interaction on the sensing surface.

Another example not covered by the invention is described, in which changes in the pressure of dispensed fluid are suppressed. An assay apparatus 210 or biosensor apparatus is for the surface plasmon resonance assay.

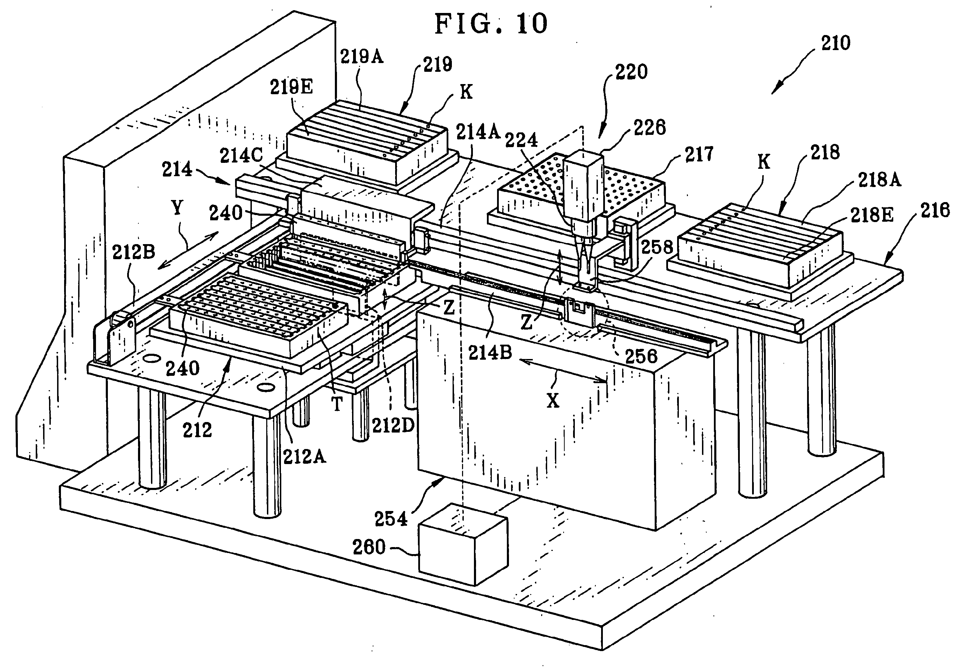

In Fig. 10, the assay apparatus 210 includes a flow cell support 212, a flow cell moving unit 214, a reservoir support 216, a fluid dispenser 220 with a multiple pipette assembly, an optical assay unit 254, and a controller 260 as speed controller.

The flow cell support 212 is a combination of various elements which are a pallet 212A, a belt 212B and the like. The belt 212B extends in the arrow direction Y, has the pallet 212A secured thereto, and turns about to move the pallet 212A in the direction Y. A tray or holder T is placed on the pallet 212A. An SPR sensor unit or sensor stick 240 for surface plasmon resonance (SPR) assay is contained in the tray or holder T. The sensor unit 240 has a chip for immobilizing the ligand D. A shifting mechanism 212D is disposed lower than the pallet 212A. A flow cell positioning panel 214C is disposed in a position where the sensor unit 240 can be shifted up by the shifting mechanism 212D.

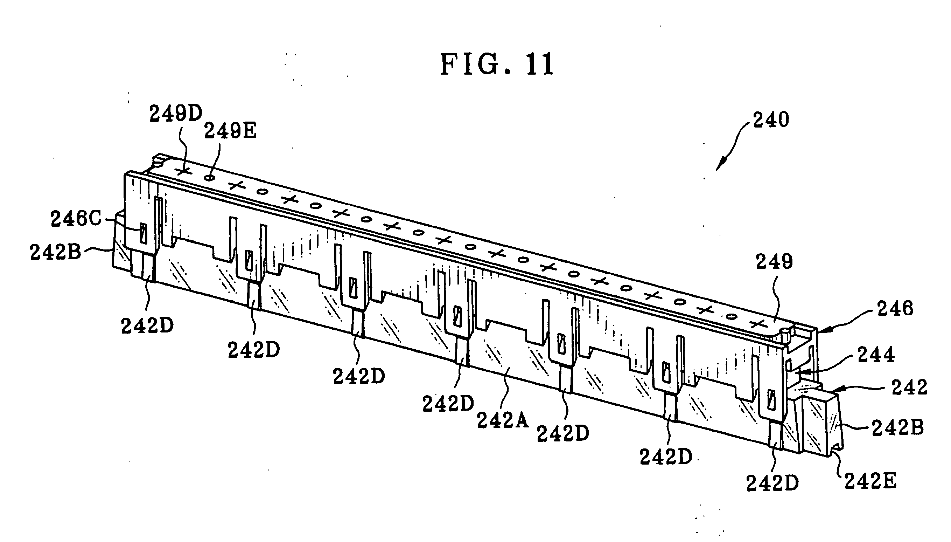

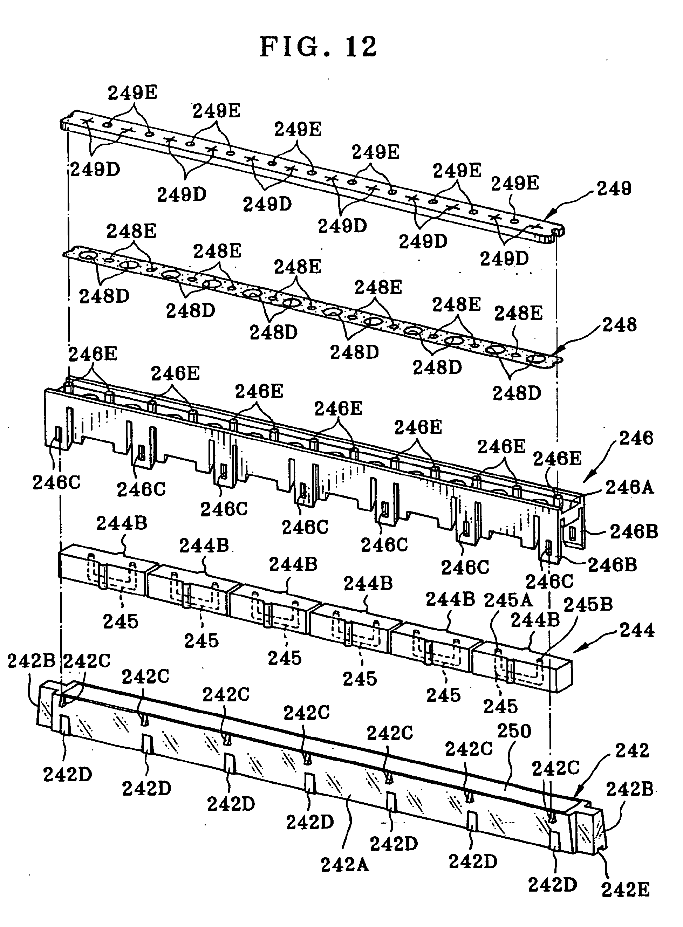

In Figs. 11 and 12, the sensor unit or sensor stick 240 includes a prism 242 as dielectric medium, a flow cell 244, a sealing mechanism 246, a double sided adhesive tape 248, and a flow cell lid 249 for preventing evaporation.

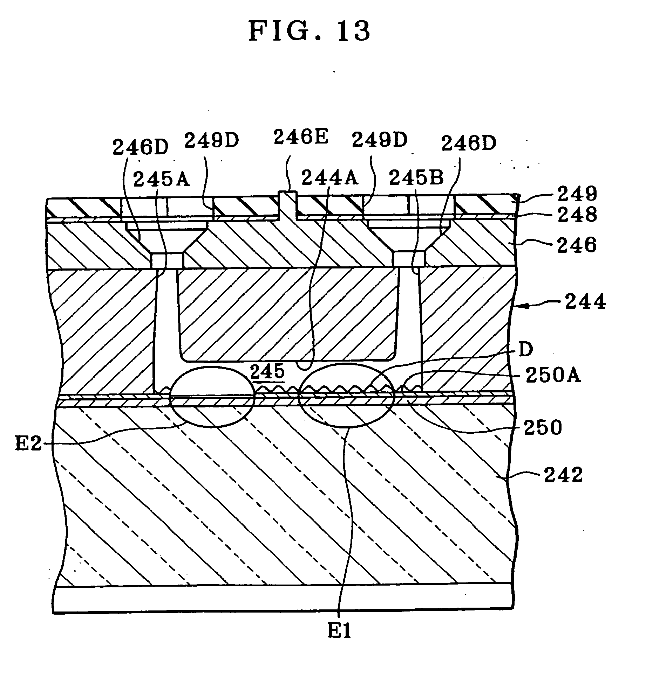

The prism 242 is formed from transparent resin with high transmittance of light, and includes a prism portion 242A and retention portions 242B. The prism portion 242A is in a shape of polyhedron and extends long in one direction. The retention portions 242B are formed with ends of the prism portion 242A as molded portions. In Fig. 13, metal film or thin film 250 with a sensing surface is formed on the upper surface of the prism portion 242A, the upper surface being one of two horizontal surfaces but larger than a remaining one of those. Ligand D for analysis with the assay apparatus 210 is immobilized on the thin film 250. The prism 242 is an optical device, of which the prism portion 242A has first and second side surfaces not parallel with one another, receives a light beam through the first side surface, and causes exit of the light beam through the second side surface upon reflection on an interface between the prism portion 242A and the thin film 250.

In Fig. 13, a linker film 250A as sensing surface is formed on the thin film 250. The linker film 250A is used to immobilize the ligand D on the thin film 250. There are a measuring region E1 and a reference region E2 formed in the linker film 250A. The measuring region E1 has immobilization of a ligand D, and is a region for reaction between the ligand D and analyte A. The reference region E2 does not have immobilization of a ligand D, and is used for outputting a reference signal for comparison with a signal retrieved from the measuring region E1. Note that the reference region E2 is formed in the course of film production of the linker film 250A. An example of a process of the forming has steps of surface processing of the linker film 250A at first, and then deactivating the reaction groups in approximately a half of an entire area of the linker film 250A for binding with ligand D. A half of the linker film 250A becomes the measuring region E1. The other half of the linker film 250A becomes the reference region E2. In order to deactivate the reaction groups, it is possible to use ethanol amine hydrochloride used in blocking. On other example for forming the reference region E2 is to use alkyl thiol instead of carboxy methyl dextran in the reference region E2. This makes it possible to position the alkyl group on the surface. The alkyl group is not bindable in the amino coupling method, and thus can construct the reference region E2.

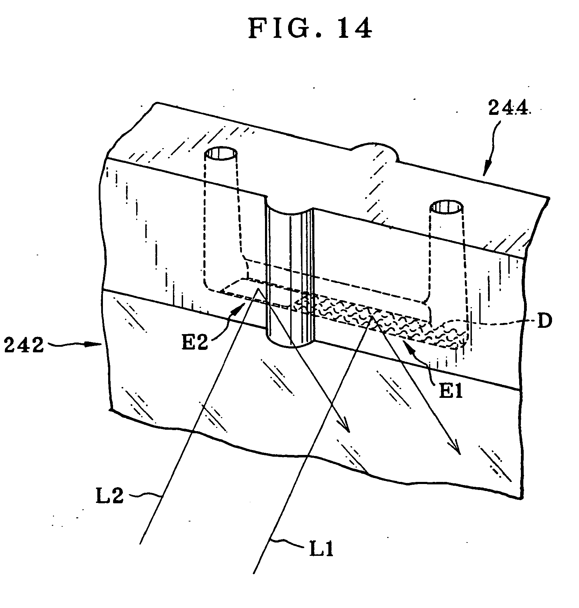

In Fig. 14, there is a flow channel 245 in which the linker film 250A extends. The ligand D is immobilized in an area of the linker film 250A different from the reference region E2. There is no ligand D immobilized in the reference region E2. Portions of the linker film 250A are subjected to application of light beams L2 and L1, the portions being included in the reference region E2 and the measuring region E1 upstream from the reference region E2. The reference region E2 is an area for correcting data obtained from the measuring region E1 with the ligand D immobilized thereon.

On lateral faces of the prism portion 242A, engageable projections 242C and projections 242D are formed. The engageable projections 242C are located on an upper edge, and engageable with the sealing mechanism 246. The projections 242D are located on a lower edge, and lie on an extension of a virtual surface vertical to the upper surface of the prism portion 242A. An engageable channel 242E is formed in a middle portion of the lower face of the prism 242 as viewed longitudinally.

A width of the flow cell 244 in a long box shape is slightly smaller than a width of the prism 242. In Fig. 12, six flow cells 244 are arranged on the thin film 250 of the prism 242. A channel recess 244A is formed in a lower portion of the flow cell 244. An entrance orifice or first orifice 245A and an exit orifice or second orifice 245B are formed through an upper portion of the flow cell 244, and are connected with the channel recess 244A, so the flow channel 245 as a path is formed with the thin film 250. Thus, the six flow channels 245 are separately formed in the sensor unit or sensor stick 240. A projection 244B is formed in each of lateral walls of the flow cell 244, for being pressed in a recess (not shown) in the sealing mechanism 246, for keeping the joint sealed in contact with the sealing mechanism 246.

A preferable example of material of the flow cell 244 is one that does not have non-specific adsorption to protein. This is because fluid containing protein flows in the flow channel 245, but must be prevented from sticking on the inside of the flow cell 244.

There are an upper panel 246A and lateral panels 246B in the sealing mechanism 246. Holes 246C are formed in the lateral panels 246B for engagement with the engageable projections 242C of the prism 242. Six flow cells 244 are squeezed between the sealing mechanism 246 and the prism 242 in connecting the sealing mechanism 246 with the prism 242 by engagement of the holes 246C and the engageable projections 242C. Thus, the flow cell 244 is secured to the prism 242. A passage aperture 246D is formed in the upper panel 246A for the position of each of the first and second orifices 245A and 245B in the flow cell 244, and has a shape with a decreasing width toward the flow cell 244. Rod shaped bosses 246E are formed between the passage apertures 246D for positioning.

The flow cell lid 249 is attached to the upper face of the sealing mechanism 246 by the double sided adhesive tape 248. Apertures 248D for access are formed in the double sided adhesive tape 248 and positioned at the passage apertures 246D for pipette insertion. Positioning holes 249E are formed in the double sided adhesive tape 248 and opposed to the bosses 246E. A cross shaped slit 249D is formed in the flow cell lid 249 and opposed to the passage aperture 246D. Holes 248E are formed in the flow cell lid 249 at the bosses 246E. The bosses 246E are inserted in the holes 248E and the positioning holes 249E, to attach the flow cell lid 249 on the upper face of the sealing mechanism 246, to oppose the cross shaped slit 249D of the flow cell lid 249 to the first and second orifices 245A and 245B of the flow cell 244. When the pipette tip CP is not inserted, the portion of the cross shaped slit 249D closes the first orifice 245A, to prevent evaporation of fluid in the flow channel 245.

In Fig. 10, elements of -the flow cell moving unit 214 of the assay apparatus 210 include an upper rail 214A, a lower rail 214B and the flow cell positioning panel 214C. The upper and lower rails 214A and 214B extend horizontally in the direction of the arrow X that is crosswise to the arrow Y, and are disposed higher than the flow cell support 212 and the optical assay unit 254. The flow cell positioning panel 214C is secured to the upper rail 214A. The flow cell positioning panel 214C keeps the retention portions 242B at ends of the sensor unit or sensor stick 240, and is movable along the upper rail 214A. The engageable channel 242E of the sensor unit 240 on the flow cell positioning panel 214C is engaged with the lower rail 214B. A photo detection region 256 is disposed on the optical assay unit 254, and is provided with the sensor unit 240 when the flow cell positioning panel 214C moves in the direction of the arrow X. Also, a fastener 258 is disposed in the photo detection region 256 and fastens the sensor unit 240 during the assay. The fastener 258 is kept movable in the direction of the arrow Z by a driving mechanism (not shown), and retains the sensor unit 240 downwards in the photo detection region 256 with pressure.

An analyte reservoir 217 or multi well analyte plate, a buffer reservoir 218 or multi well buffer plate, and a waste fluid reservoir 219 or multi well waste fluid receptacle are placed on the reservoir support 216. The analyte reservoir 217 has regions distributed in a matrix form, and stores analyte fluids of various types. Wells 218A-218E are included in the buffer reservoir 218, and store buffers of various types. An opening K is defined in each of the wells 218A-218E for insertion of the pipette tip CP. Wells 219A-219E are included in the waste fluid reservoir 219 as receptacles of waste fluid. Also, an opening K is defined in each of the wells 219A-219E for insertion of the pipette tip CP.

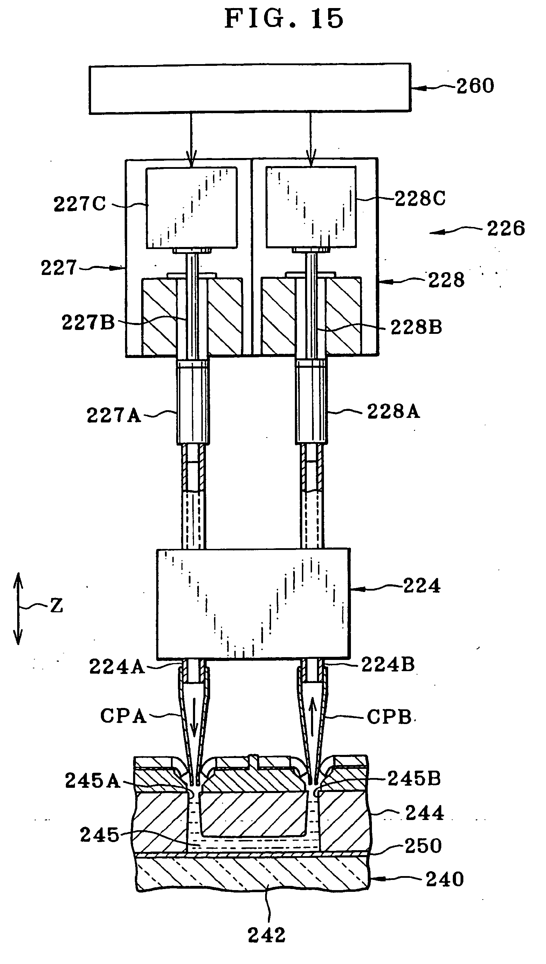

The fluid dispenser 220 includes a pipette head 224 in a multiple pipette assembly, and a fluid transfer mechanism-226 for dispensation and aspiration. The pipette head 224 is movable in the direction Y along transport rails (not shown). A driving mechanism (not shown) in the pipette head 224 moves the unit of the pipette head 224 in the vertical direction indicated with the arrow Z. In Fig. 15, the pipette head 224 includes pipette devices 224A and 224B with pipette nozzles. A pipette tip CP is fitted on each of the pipette devices 224A and 224B, so that a length of each of the pipette unit is changeable in the direction Z. A great number of the pipette tips CP are stored in a pipette tip storage, and are exchangeable if required.

The fluid transfer mechanism 226 includes a first pump or dispensing pump 227 and a second pump or aspirating pump 228. The dispensing pump 227 is structurally a syringe pump, and includes a cylinder 227A, a piston 227B, and a first pump motor 227C for driving the piston 227B. The aspirating pump 228 is structurally a syringe pump, and includes a cylinder 228A, a piston 228B, and a second pump motor 228C for driving the piston 228B. The pump motors 227C and 228C are connected with respectively pump drivers 260D and 260E provided in the controller 260.

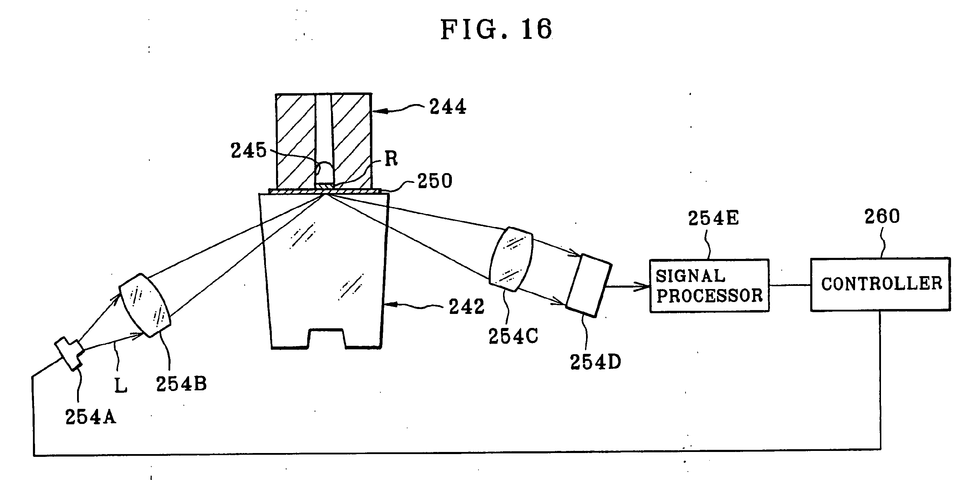

In Fig. 16, the optical assay unit 254 includes a light source 254A, a first optical system 254B, a second optical system 254C, a photo detector 254D and a signal processor 254E. A light L or light beam of a diffused state is emitted by the light source 254A. The first optical system 254B receives the light L and converts this into two light beams L1 and L2, which become incident on the regions of the prism 242 on the photo detection region 256. The light or light beams L1 and L2 are incident on the interface between the thin film 250 and the prism 242 with numerous components of incident angles, and also are incident at angles equal to or more than an angle enough for total reflection. The light L1 and L2 is reflected by the interface between the prism 242 and the thin film 250 in the manner of total reflection. There are plural angles as angular components of reflections in the totally reflected light L1 and L2. The light L1 and L2 is passed through the second optical system 254C, received by the photo detector 254D and converted photoelectrically, so that a detection signal is sent to the signal processor 254E. The signal processor 254E processes information according to the detection signal, and determines data of angles of attenuated total reflection of the measuring and reference regions E1 and E2. The angle data are output to the controller 260.

The controller 260 controls the entirety of the assay apparatus 210. In Fig. 16, the controller 260 is connected with the light source 254A, the signal processor 254E and a driving system (not shown) for the assay apparatus 210.

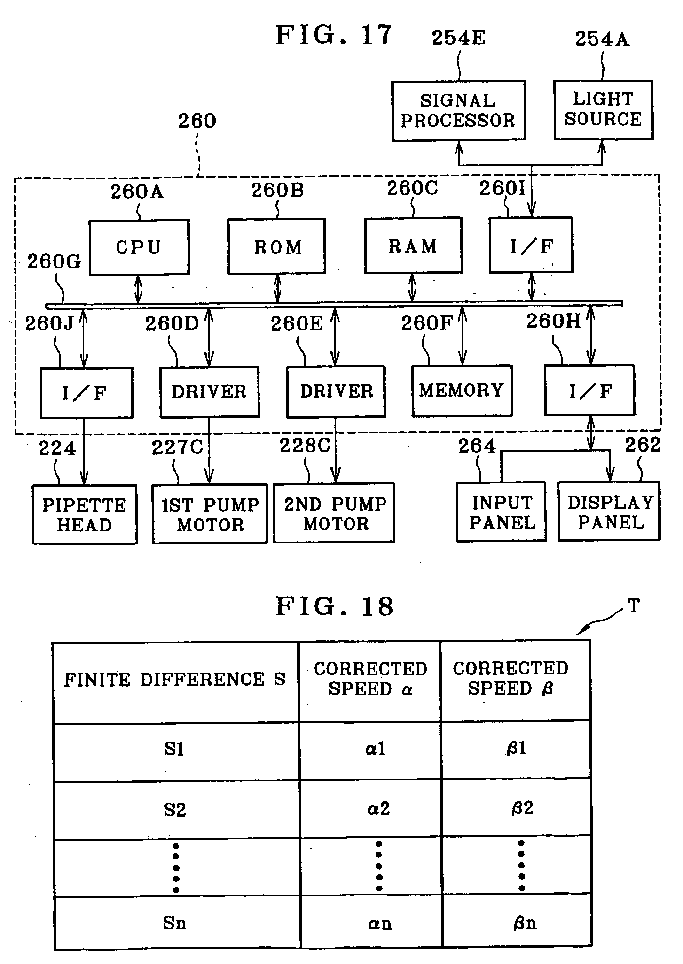

In Fig. 17, the controller 260 includes not only the pump drivers 260D and 260E but a CPU 260A, ROM 260B, RAM 260C, a memory 260F and interfaces 260H, 260I and 260J. A bus 260G connects those elements with one another. The pump driver 260D is connected with the first pump motor 227C. The pump driver 260E is connected with the second pump motor 228C. A display panel 262 is connected by the interface 260H with the controller 260 for displaying information of various kinds. An input panel 264 is connected by the interface 260H with the controller 260 for inputting various signals for command and information. Also, the signal processor 254E and the light source 254A are connected by the interface 260I. The pipette head 224 is connected by the interface 260J. The ROM 260B stores programs for control of the pipette head 224, and the dispensing and aspirating pumps 227 and 228.

In Fig. 18, the memory 260F stores a data table T of data of a relationship between the finite difference S and the corrected speeds α and β. The finite difference S is defined between dispensing and aspirating flow rates of the dispensing and aspirating pumps 227 and 228 per unit time. The corrected speeds α and β are levels of speed of the dispensing and aspirating pumps 227 and 228 for canceling the finite difference S. The finite difference S is derived from an error in an inner diameter of the cylinder of the syringe pump. Note that information of the corrected speeds α and β may not be speeds itself, but can be information represented by numbers of pulses of the stepping motor, or information of rates of increase or decrease of the speed. Also, one of the corrected speeds α and β may be omitted, and only a remaining one of those for either one of the dispensing and aspirating pumps 227 and 228 may be used. The finite difference S in the assay apparatus 210 of the embodiment is previously determined experimentally. For the corrected speeds α and β, plural values are prepared and selectively used. Symbols S1, α1 and β1 are used herein.

In the present invention, information for the corrected speeds α and β of the pumps may be in any suitable form, for example pressure exerted by pumps to fluid, energy for driving the pumps with the motors, or other quantitative values.

Assay in the assay apparatus 210 will be hereinafter described.

A tray is set on the pallet 212A of the assay apparatus 210, with the sensor unit or sensor stick 240 where the ligand D is immobilized and the flow channel 245 is filled with the fluid C for preservation. Analyte fluid is stored in the analyte reservoir 217.

At first, the shifting mechanism 212D shifts up the sensor unit or sensor stick 240 to the position of the flow cell positioning panel 214C, for the flow cell positioning panel 214C to keep the sensor unit 240. Then the flow cell positioning panel 214C with the sensor unit 240 shifts along the lower rail 214B, to transport the sensor unit 240 to the photo detection region 256. The sensor unit 240 in the photo detection region 256 is set suitably in assay position, and kept immovable by the fastener 258 with downward pressure.

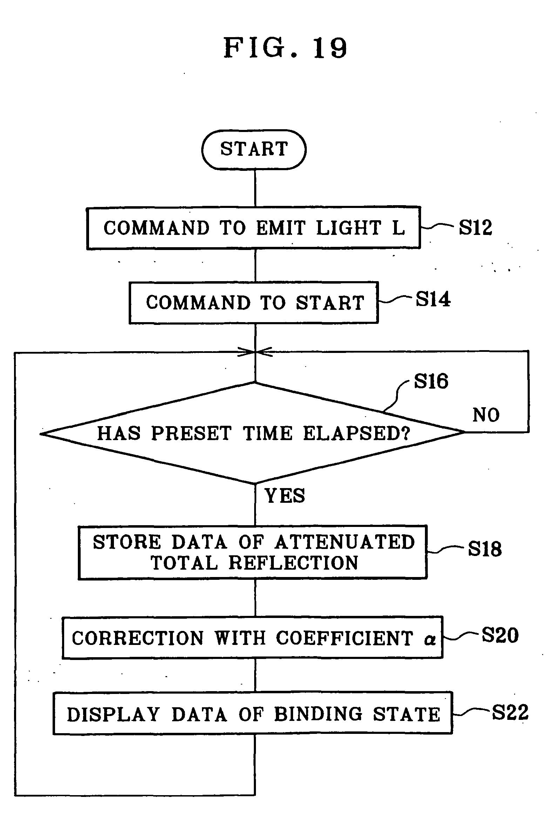

A command signal for starting the assay is input by the input panel 264. In response, the assay of Fig. 19 is started by the controller 260.

In the step S12, the light source 254A is provided with a command signal for emission of the light L. The light source 254A responsively emits the light L. The first optical system 254B converts the light L into two light beams L1 and L2, which become incident on the measuring and reference regions E1 and E2. In the step S14, the controller 260 sends a command signal to the photo detector 254D and the signal processor 254E. The light L1 and L2, passed through the second optical system 254C after total reflection on the measuring and reference regions E1 and E2, is received by the photo detector 254D. The light L1 and L2 is photoelectrically detected in each of the measuring and reference regions E1 and E2, to send detection signals to the signal processor 254E. The signal processor 254E processes the detection signals, and creates angle data of the attenuated total reflection. The angle data is sent to the controller 260.

In the step S16, the controller 260 determines whether time of a preset length has elapsed or not. In the step S18 after the lapse of the time, the angle data of the attenuated total reflection is written to the memory 260F. In the step S20, angle data according to the detection signal from the measuring region E1 is corrected by considering angle data according to the detection signal from the reference region E2. Data of a binding state is created, the binding state being of the ligand D with the analyte A in the analyte fluid YA. In the step S22, the data of the binding state is output to the display panel 262. The data of the binding state per unit time is written to the memory 260F, and can be displayed on the display panel 262. A form of displaying the data of the binding state is a graph form. Note that the operation of the assay is continued until reception of the end signal of measuring in the assay.

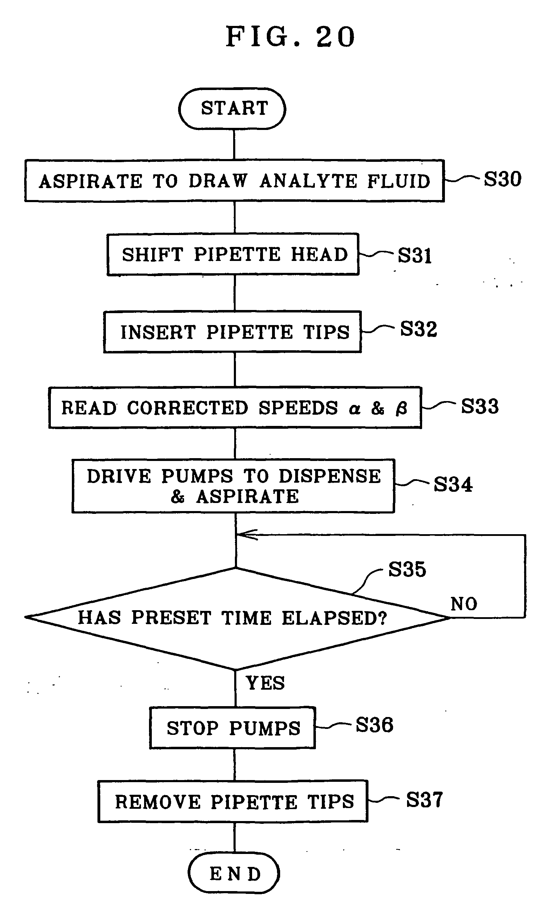

When a command signal for starting delivery of analyte is input by the input panel 264, then the controller 260 operates for the process of analyte delivery as illustrated in Fig. 20.

At first, the analyte fluid YA is delivered by aspiration through the pipette tip CPA. To this end, the pipette head 224 is shifted and set higher than the analyte reservoir 217 Storing the analyte fluid YA. The pipette device 224A is moved down to insert only an end of the pipette tip CPA secured to the pipette device 224A, for insertion in a well storing the analyte fluid YA. The first pump motor 227C drives the piston 227B for decompression of the cylinder 227A with negative pressure. The analyte fluid YA is aspirated and drawn into the pipette tip CPA.

In the step S31, the pipette head 224 is moved to the sensor unit or sensor stick 240. In the step S32, the pipette tip CPA is inserted in the first orifice 245A. The pipette tip CPB is inserted in the second orifice 245B.

In the step S33, the corrected speeds α1 and β1 are read from the memory 260F. In the step S34, the controller 260 outputs command signals to the pump drivers 260D and 260E to drive the pump motors 227C and 228C at the corrected speeds α1 and β1. Thus, the dispensing and aspirating pumps 227 and 228 are driven. The analyte fluid YA is dispensed by the pipette tip CPA to introduce to the flow channel 245. The buffer liquid in the flow channel 245 is aspirated and removed by the pipette tip CPB.

In the step S35, the apparatus waits to stand until lapse of predetermined time for delivery of analyte fluid YA of a predetermined amount. Upon the lapse of predetermined time, the dispensing and aspirating pumps 227 and 228 are stopped in the step S36.

In the step S37, the pipette tips CPA and CPB are removed from the first and second orifices 245A and 245B. In the step S38, the buffer liquid in the pipette tip CPB is drained to the waste fluid reservoir 219. Thus, the operation of delivery of the analyte is completed.

Also, the assay is completed when a completion command signal is received.

It follows in the embodiment that the introduction of the analyte fluid YA to the flow channel 245 is according to driving of the dispensing and aspirating pumps 227 and 228 at the corrected speeds α1 and β1. Changes in the pressure of the fluid delivery can be suppressed-because a difference can be canceled between the dispensing flow rate to the flow channel 245 and the aspirating flow rate from the flow channel 245 per unit time. Failure in the introduction of fluid can be prevented, to make higher the reliability of the assay apparatus 210.

In the present embodiment, speed of the dispensing or aspirating pump 227 or 228 is corrected in relation to the analyte fluid YA. However, it is possible in the invention to control the speed of pumps in relation to buffer, washing liquid or the like so as to suppress changes in the pressure of the fluid dispensation.

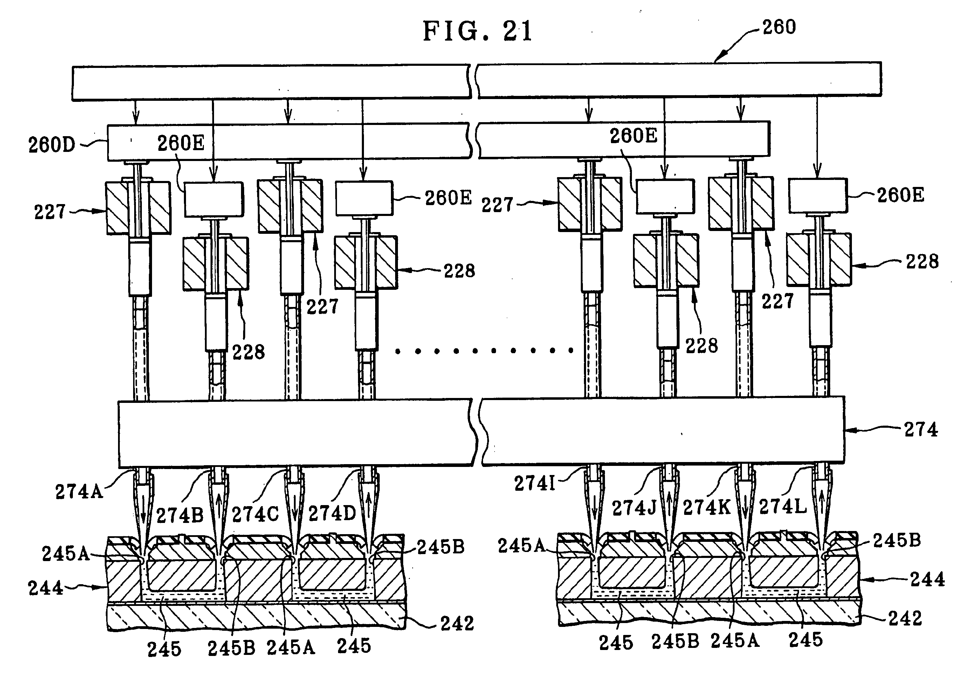

In Fig. 21, another example not covered to the invention of a multichannel type is illustrated. A multichannel pipette head 274 in multiple pipette assemblies is provided with 12 pipette devices 274A-274L in six couples. Fluids can be sent to a plurality of the flow channels 245 at one time. To this end, the pipette devices 274A, 274C, 274E, 274G, 274I and 274K are on the side of dispensation at one time. Each of those is inserted in the first orifice 245A and operated by driving of the dispensing pump 227 with the pump driver 260D. In turn, the pipette devices 274B, 274D, 274F, 274H, 274J and 274L are on the side of aspiration at one time. Each of those is inserted in the second orifice 245B and operated by driving of the aspirating pump 228 with the pump driver 260E.

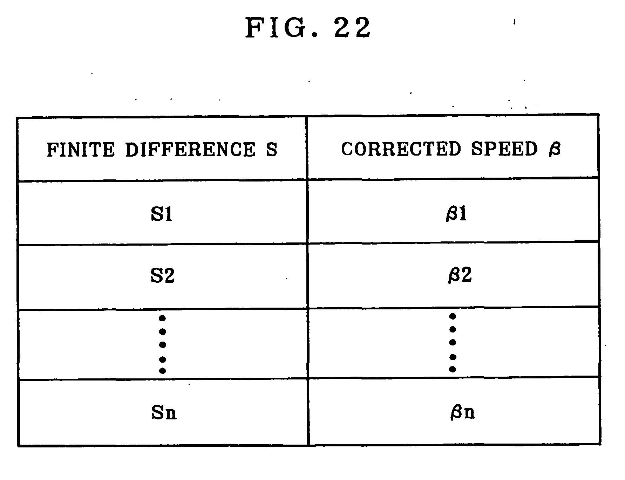

The corrected speed for canceling the finite difference S between the dispensing and aspirating flow rates is referred to. In Fig. 22, only the corrected speed β of the aspirating pump 228 is stored. The aspirating pump 228 is driven at the corrected speed β by use of an associated one pump driver 260E.

It is possible according to the multichannel structure to cancel a difference or error between the dispensing and aspirating flow rates simply by adjusting the speed of the aspirating pump 228.

In spite of the above example, it is possible to construct the assay apparatus for a counterflow from the pipette tip CPB toward the pipette tip CPA if it is desired. The first pump 227 is driven for aspiration. The second pump 228 is driven for dispensation. Corrected speeds of those are the corrected speeds α and β. A negative value of the correction table T is used for corrected speeds. Consequently, errors can be corrected in the time of the counterflow, so as to suppress changes an inner pressure.

In the above example, the assay apparatus 210 is according to surface plasmon resonance (SPR) assay. However, the assay apparatus 210 of the invention can be any suitable apparatus of systems of (bio) chemical assay. Measurement in which analyte is removed according to the invention may be any of suitable systems, for example, quartz crystal microbalance (QCM) measurement with quartz of oscillation, and measurement of functioning surfaces of various particles including colloid particles of gold, and ultramicro particles.

In addition to the SPR sensor, an assay sensor unit according to the invention can be other sensor in utilizing attenuated total-reflection, for example, a leaky mode sensor.

Note that in any of the embodiments, a pipette device group having plural pipette devices may be constituted by a single multiple pipette assembly, or a plurality of multiple pipette assemblies, or a plurality of single pipette devices. In the wording of the specification, a multiple pipette assembly is generally combined with one pipette head, and may have any number of single pipette devices, for example, two, four, eight or so.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. An assay system including a sample immobilizing apparatus (10) and an assay apparatus (11), said assay system comprising:
a sensor unit (12, 120) including a flow channel (16, 122) having plural orifices (16a, 16b) and a sensing surface (13a) positioned in said flow channel for detecting reaction of sample in sample fluid (21, 27);
a fluid dispenser for dispensation and introduction of said sample fluid (21, 27) to said sensing surface (13a), said fluid dispenser comprising:
a pipette device group (19, 26, 126), having plural pipette devices (19a, 19b, 26a, 26b, 126a-126c) for accessing respectively said orifices;
plural pumps (52, 147), connected respectively with said pipette devices, for pressurization to dispense said sample fluid through said pipette devices, or for decompression to aspirate said sample fluid through said pipette devices; and
a pump controller;
**characterized in that** said pump controller (104) is adapted to drive said pumps in a manner independent from one another,
a pressure sensor (65) is provided and is adapted to detect pipette inner pressure of each of said pipette devices, to output an electric signal;
wherein said pump controller controls said pumps according to said electric signal, and that there are further provided:
a failure checking unit (55), responsive to said electric signal from said pressure sensor (65), for checking said pipette inner pressure of said pipette devices for failure according to said electric signal from the pressure sensor (65);
a treating unit (55, 66) adapted to perform a predetermined treating process when failure is determined from at least one of said pipette devices;
wherein said treating process is a fail-safe interrupt process to cause said pump controller (55) to stop said pumps, and to stop dispensation to said flow channel,
wherein said flow channel in said sensor unit is constituted by plural flow channels, and said pipette device group is constituted by plural pipette device assemblies suitable for being associated with respectively said flow channels, and
wherein said treating unit performs said interrupt process for only one of said plural pipette device assemblies having a pipette device of which failure is detected by said failure checking unit.

2. A fluid dispenser as defined in claim 1, wherein while said sample fluid is in said flow channel, said pump controller causes a first one of said pipette devices to aspirate and a second one of said pipette devices to dispense in an alternate manner repeatedly, to create a flow in turbulence of said sample fluid in said flow channel.

3. A fluid dispenser as defined in claim 1, further comprising an alarm signal generator, responsive to detection of failure in said failure checking unit, for generating a signal of occurrence of failure in said pipette inner pressure of one of said pipette devices.

4. A fluid dispenser as defined in claim 1, further comprising an input device for inputting a restart command signal to said treating unit to terminate said interrupt process;
wherein said treating unit continues said interrupt process until said restart command signal is input.

5. A fluid dispenser as defined in claim 1, wherein after entry of said interrupt process, said treating unit removes failure in said pipette inner pressure for recovery, and then terminates said interrupt process.

6. A fluid dispenser as defined in claim 1, wherein while said plural pipette devices move away from said sensor unit, said pump controller causes said pumps to decompress a space in said plural pipette devices and said flow channel.

7. A fluid dispenser as defined in claim 1, wherein said treating unit records history information of history of occurrence of said failure.

## Patentansprüche

1. Untersuchungssystem, enthaltend eine Proben-Ruhigstellvorrichtung (10) und eine Untersuchungsvorrichtung (11), umfassend:
eine Sensoreinheit (12, 120) mit einem Strömungskanal (16, 122), der mehrere Öffnungen (16a, 16b) enthält, und mit einer Sensorfläche (13a), die in dem Strömungskanal zum Nachweisen einer Reaktion einer Probe in einem Probenfluid (21, 27) angeordnet ist;
einen Fluiddosierer zum Dosieren und Zuführen des Probenfluids (21, 27) zu der Sensorfläche (13a), wobei der Fluiddosierer umfasst:
eine Pipettengruppe (19, 26, 126) mit einer Mehrzahl von Pipetten (19a, 19b, 26a, 26b, 126a-126c) für den Zugriff auf entsprechende Öffnungen;
mehrere Pumpen (52, 147), die mit den Pipetten zum Unter-Druck-Setzen verbunden sind, so dass Probenfluid durch die Pipetten hindurch dosiert wird, oder zum Dekomprimieren, damit das Probenfluid durch die Pipetten angesaugt wird; und
eine Pumpensteuerung;
**dadurch gekennzeichnet, dass** die Pumpensteuerung (104) dazu ausgebildet ist, die Pumpen in voneinander unabhängiger Weise zu betreiben, dass ein Drucksensor (65) vorgesehen und dazu ausgebildet ist, Pipetten-Innendruck jeder der Pipetten nachzuweisen, um ein elektrisches Signal auszugeben;
wobei die Pumpensteuerung die Pumpe nach Maßgabe des elektrischen Signals steuert, und dass außerdem vorgesehen sind:
eine Ausfallprüfeinheit (55), die auf das elektrische Signal von dem Drucksensor (65) anspricht, um den Pipetten-Innendruck der Pipetten bezüglich eines Ausfalls entsprechend dem elektrischen Signal von dem Drucksensor (65) zu prüfen;
eine Behandlungseinheit (55, 66), ausgebildet zum Ausführen eines vorbestimmten Behandlungsprozesses, wenn ein Ausfall an mindestens einer der Pipetten festgestellt wird;
wobei der Behandlungsprozess ein Störsicherheits-Unterbrechungsprozess zum Veranlassen der Pumpensteuerung (55), die Pumpen anzuhalten, und zum Anhalten der Dosierung in den Strömungskanal ist,
wobei der Strömungskanal in der Sensoreinheit gebildet wird durch eine Mehrzahl von Strömungskanälen, und die Pipettengruppe gebildet wird durch mehrere Pipettenanordnungen, die geeignet sind für die Zuordnung zu den Strömungskanälen, und
wobei die Behandlungseinheit den Unterbrechungsprozess für lediglich eine der mehreren Pipettenanordnungen durchführt, in der sich eine Pipette befindet, bei der ein Ausfall durch die Ausfallprüfeinheit nachgewiesen wurde.

2. Fluiddosierer nach Anspruch 1, bei der, während sich das Probenfluid in dem Strömungskanal befindet, die Pumpensteuerung wiederholt und abwechselnd eine erste der Pipetten veranlasst, anzusaugen, und dass eine zweite der Pipetten veranlasst, zu dosieren, um in dem in dem Strömungskanal befindlichen Probenfluid eine turbulente Strömung zu erzeugen.

3. Fluiddosierer nach Anspruch 1, weiterhin umfassend einen Alarmsignalgenerator, der auf den Nachweis eines Ausfalls durch die Ausfallprüfeinheit anspricht, um ein Signal entsprechend dem Auftreten eines Ausfalls des Pipettendrucks einer der Pipetten zu erzeugen.

4. Fluiddosierer nach Anspruch 1, weiterhin umfassend eine Eingabeeinrichtung zum Eingeben eines Neustart-Befehlssignals in die Behandlungseinheit, um den Unterbrechungsprozess zu beenden;
wobei die Behandlungseinheit den Unterbrechungsprozess fortsetzt, bis das Neustart-Befehlssignal eingegeben wird.

5. Fluiddosierer nach Anspruch 1, bei dem im Anschluss an den Eintritt in den Unterbrechungsprozess die Behandlungseinheit einen Ausfall des Pipetteninnendrucks zur Wiederherstellung beseitigt und anschließend den Unterbrechungsprozess beendet.

6. Fluiddosierer nach Anspruch 1, bei dem, während die mehreren Pipetten sich von der Sensoreinheit wegbewegen, die Pumpensteuerung die Pumpe veranlasst, einen Raum in den mehreren Pipetten und dem Strömungskanal zu dekomprimieren.

7. Fluiddosierer nach Anspruch 1, bei dem die Behandlungseinheit eine Verlaufsgeschichten-Information bezüglich des Auftretens des Ausfalls aufzeichnet.

## Revendications

1. Système d'essai comprenant un appareil d'immobilisation d'échantillon (10) et un appareil d'essai (11), ledit système d'essai comprenant :
une unité de capteur (12, 120) comprenant un canal d'écoulement (16, 122) ayant plusieurs orifices (16a, 16b) et une surface de détection (13a) positionnée dans ledit canal d'écoulement pour détecter la réaction de l'échantillon dans le fluide d'échantillon (21, 27) ;
un distributeur de fluide pour la distribution et l'introduction dudit fluide d'échantillon (21, 27) sur ladite surface de détection (13a), ledit distributeur de fluide comprenant :
un groupe de dispositifs formant pipettes (19, 26, 126) ayant plusieurs dispositifs formant pipettes (19a, 19b, 26a, 26b, 126a-126c) pour avoir accès respectivement auxdits orifices ;
plusieurs pompes (52, 147) raccordées respectivement avec lesdits dispositifs formant pipettes, pour la pressurisation afin de distribuer ledit fluide d'échantillon par lesdits dispositifs formant pipettes ou pour la décompression afin d'aspirer ledit fluide d'échantillon par lesdits dispositifs formant pipettes ; et
un contrôleur de pompe ;
**caractérisé en ce que** ledit contrôleur de pompe (104) est adapté pour entraîner lesdites pompes de manière indépendante les unes par rapport aux autres,
un capteur de pression (65) est prévu et est adapté pour détecter la pression interne de pipette de chacun desdits dispositifs formant pipettes, afin de produire un signal électrique ;
dans lequel ledit contrôleur de pompe contrôle lesdites pompes selon ledit signal électrique, et **en ce que** l'on prévoit en outre :
une unité de vérification de défaillance (55) sensible audit signal électrique provenant dudit capteur de pression (65), pour vérifier ladite pression interne de pipette desdits dispositifs formant pipettes pour défaillance selon ledit signal électrique provenant du capteur de pression (65) ;
une unité de traitement (55, 66) adaptée pour réaliser un processus de traitement prédéterminé lorsque la défaillance est déterminée à partir d'au moins l'un desdits dispositifs formant pipettes ;
dans lequel ledit processus de traitement est un processus d'interruption par protection par défaut pour amener ledit contrôleur de pompe (55) à arrêter lesdites pompes, et à arrêter la distribution dans ledit canal d'écoulement,
dans lequel ledit canal d'écoulement dans ladite unité de capteur est constitué par plusieurs canaux d'écoulement, et ledit groupe de dispositifs formant pipettes est constitué par plusieurs ensembles de dispositifs formant pipettes appropriés pour être associés respectivement auxdits canaux d'écoulement, et
dans lequel ladite unité de traitement réalise ledit processus d'interruption uniquement pour l'un desdits plusieurs ensembles de dispositifs formant pipettes ayant un dispositif formant pipette dont la défaillance a été détectée par ladite unité de vérification de défaillance.

2. Distributeur de fluide selon la revendication 1, dans lequel, alors que ledit fluide d'échantillon est dans ledit canal d'écoulement, ledit contrôleur de pompe provoque l'aspiration d'un premier desdits dispositifs formant pipettes et la distribution d'un second desdits dispositifs formant pipettes d'une manière alternée par répétition, afin de créer un écoulement en turbulence dudit fluide d'échantillon dans ledit canal d'écoulement.

3. Distributeur de fluide selon la revendication 1, comprenant en outre un générateur de signal d'alarme sensible à la détection de la défaillance dans ladite unité de vérification de défaillance, pour générer un signal d'occurrence de défaillance de ladite pression interne de pipette de l'un desdits dispositifs formant pipettes.

4. Distributeur de fluide selon la revendication 1, comprenant en outre un dispositif d'entrée pour entrer un signal de commande de redémarrage dans ladite unité de traitement afin de terminer ledit processus d'interruption ;
dans lequel ladite unité de traitement continue ledit processus d'interruption jusqu'à ce que ledit signal de commande de redémarrage soit introduit.

5. Distributeur de fluide selon la revendication 1, dans lequel après l'entrée dudit processus d'interruption, ladite unité de traitement supprime la défaillance de ladite pression interne de pipette pour récupération, et termine ensuite ledit processus d'interruption.

6. Distributeur de fluide selon la revendication 1, dans lequel alors que ladite pluralité de dispositifs formant pipettes s'éloigne de ladite unité de capteur, ledit contrôleur de pompe amène lesdites pompes à décompresser un espace dans ladite pluralité de dispositifs formant pipettes et ledit canal d'écoulement.

7. Distributeur de fluide selon la revendication 1, dans lequel ladite unité de traitement enregistre l'information d'historique de l'historique d'occurrence de ladite défaillance.
